# EUROPEAN PATENT APPLICATION

(11) **EP 1 560 151 A2**
(43) Date of publication of application: **03.08.2005**
(21) Application number: 05100380.4
(22) Date of filing: 21.01.2005
(51) Int. Cl.: G06K 15/00, G06F 3/12, B41J 29/393

(54) **Job management in image output devices**

(30) Priority: 29.01.2004 JP 2004021567
(71) Applicant: KONICA MINOLTA HOLDINGS, INC., Tokyo 100-0005 (JP)
(72) Inventor: Akune, Junichirou Konica Minolta Techn. Center Inc, Tokyo, 192-8505 (JP); Ooishi, Tatsuro Konica Minolta Techn. Center Inc, Tokyo, 192-8505 (JP); Soukei, Sei Konica Minolta Techn. Center Inc, Tokyo, 192-8505 (JP); Nakamizo, Takashi Konica Minolta Techn. Center Inc, Tokyo, 192-8505 (JP); Inai, Masayuki Konica Minolta Techn. Center Inc, Tokyo, 192-8505 (JP)
(74) Representative: Henkel, Feiler & Hänzel

(57) **Abstract**

There is described an image-processing apparatus that is provided with a receiving section to receive jobs, each of which includes image data; an arithmetic calculating section to convert the image data to print data for every job; a storage section to store the jobs received by the receiving section and the print data converted by the arithmetic calculating section for every job; an outputting section to output the print data to a printing section for every job; and a controlling section to control a receiving processing applied for the jobs in the receiving section, a conversion processing applied for each of the jobs in the arithmetic calculating section and an output processing applied for each of the jobs in the outputting section. Accordingly, the image-processing apparatus can separately control a receiving state of each of the jobs, a converting state of each of the jobs and an outputting state of each of the jobs.

## Description

### BACKGROUND OF THE INVENTION

The present invention relates to an image-processing apparatus, an image-recording apparatus and an image-recording system, and specifically relates to an image-processing apparatus, an image-recording apparatus and an image-recording system, which are capable of separately controlling each of a signal receiving step, an arithmetic calculating step and an image recording step as a processing status of an image recording job.

In recent years, in the technical field of recording an image onto a recording medium by means of the image-recording apparatus, which is provided with a recording apparatus, such as an ink-jet printer, etc., and an image-processing apparatus for controlling the recording apparatus, there has been developed an image-recording technique that records the image onto the recording medium, based on image information sent from an external image-information transmitting apparatus through an network and received by the image-processing apparatus for controlling the recording apparatus.

For instance, in order to avoid troublesome operations for transmitting the image information every time when recording the image, the image-recording apparatus have been disclosed that is provided with a storage section for storing the image information and an operating section for designating again the image forming operation based on the image information as needed (for instance, set forth in Tokkaihei 1-229674, Japanese Non-Examined Patent Publication), and another image-recording apparatus that displays a list in such a manner that image information already recorded by the recording apparatus can be discriminated from non-recorded image information (for instance, set forth in Japanese Patent 2984297).

Further, since it takes much time to create dot-style image data by applying an arithmetic calculation processing to the image information sent from the external image-information transmitting apparatus, there have been disclosed various kinds of image-recording apparatus that store the dot-style image data after the image-recording operation based on the dot-style image data is finalized (for instance, set forth in Tokkaihei 1-229674, Japanese Non-Examined Patent Publication, and also set forth in Japanese Patent 3392127).

In such the conventional image-processing apparatus and image-recording apparatus, however, when the image information is transmitted, the arithmetic calculation processing automatically commences. Accordingly, there has been a problem that when the image information, which require much time for completing the arithmetic calculation processing, are transmitted, it is virtually impossible to commence image processing for other image information transmitted thereafter until the former arithmetic calculation processing is finalized, resulting in an inefficiency of the image-recording operation as a whole. Further, another problem has been that when viewing the total combination of the image-processing apparatus, the image-recording apparatus and the image-information transmitting apparatus, which are coupled to each other through the network, as a single image-recording system, the works for executing image-recording jobs, each of which is a working unit for recording the image onto the recording medium based on the image information, would pile up everywhere in the system, resulting in an difficulty of constituting an efficient system.

### SUMMARY OF THE INVENTION

To overcome the abovementioned drawbacks in conventional image-recording systems, it is an object of the present invention to provide an image-processing apparatus, image-recording apparatus and an image-recording system, which make it possible to exactly grasp a processing status of an image-recording job at each of a signal receiving step, an arithmetic calculating step and an image-recording step.

Further, it is another object of the present invention to provide an image-processing apparatus, an image-recording apparatus and an image-recording system, which are capable of controlling a processing status of an image-recording job separately at each of a signal receiving step, an arithmetic calculating step and an image-recording step so as to perform a smooth production of imaging products.

Accordingly, to overcome the cited shortcomings, the abovementioned objects of the present invention can be attained by image-processing apparatus described as follow.
(1) An image-processing apparatus, comprising: a receiving section to receive jobs, each of which includes image data; an arithmetic calculating section to convert the image data to print data for every job; a storage section to store the jobs received by the receiving section and the print data converted by the arithmetic calculating section for every job; an outputting section to output the print data to a printing section for every job; and a controlling section to control a receiving processing applied for the jobs in the receiving section, a conversion processing applied for each of the jobs in the arithmetic calculating section and an output processing applied for each of the jobs in the outputting section.

### BRIEF DESCRIPTION OF THE DRAWINGS

Other objects and advantages of the present invention will become apparent upon reading the following detailed description and upon reference to the drawings in which:
Fig. 1 shows a block diagram of an image-recording system employing an image-processing apparatus, embodied in the present invention;
Fig. 2(A) shows a schematic diagram for explaining a main-scanning direction or horizontal direction, and a sub-scanning direction or vertical direction of an image recorded on a recording medium;
Fig. 2(B) shows an explanatory schematic diagram for explaining the main-scanning direction or horizontal direction, and the sub-scanning direction or vertical direction of an image displayed on a display input section;
Fig. 3 shows a block diagram of a configuration of an image-information transmitting apparatus;
Fig. 4(A) shows an arrangement of images pasted on a recording medium "A", for explaining a digital pasting function performed by an image-editing section in the image-information transmitting apparatus;
Fig. 4(B) shows an arrangement of images displayed on a displaying device, for explaining a digital pasting function performed by an image-editing section in the image-information transmitting apparatus;
Fig. 5 shows an arrangement of images arranged on a recording medium, for explaining an automatic arranging function performed by an image-editing section in the image-information transmitting apparatus;
Fig. 6 shows an arrangement of images arranged on a recording medium, for explaining a repeating function in a vertical direction performed by an image-editing section in the image-information transmitting apparatus;
Fig. 7 shows an arrangement of images arranged on a recording medium, for explaining a repeating function in a horizontal direction performed by an image-editing section in the image-information transmitting apparatus;
Fig. 8 shows an exemplified arrangement of a setting screen, which is displayed on a displaying device of an image-information transmitting apparatus when calling a bridge;
Fig. 9(A) shows a schematic diagram of a detecting section for detecting a stitched seam portion, based on a thickness change of the recording medium;
Fig. 9(B) shows a schematic diagram of a detecting section for detecting a stitched seam portion by using an ultraviolet light beam;
Fig. 10 shows a block diagram of a configuration of an image-processing apparatus;
Fig. 11 shows a schematic diagram of a printer screen displayed on a display input section;
Fig. 12 shows a schematic diagram of an inputted job screen displayed on a display input section;
Fig. 13 shows a schematic diagram of an arithmetic calculation property screen displayed on a display input section;
Fig. 14 shows a schematic diagram of an arithmetic calculation job screen displayed on a display input section;
Fig. 15 shows a schematic diagram of a recording property setting screen displayed on a display input section;
Fig. 16 shows a schematic diagram of a recording job screen displayed on a display input section;
Fig. 17 shows a schematic diagram of an output allotment setting screen displayed on a display input section;
Fig. 18(A) shows a schematic diagram of a state of applying an output allotment processing to a single recording medium;
Fig. 18(B) shows a schematic diagram of a state of applying an output allotment processing to plural recording mediums;
Fig. 19 shows a schematic diagram of a property confirmation screen displayed on a display input section;
Fig. 20 shows a schematic diagram of an expected amount of consumed ink confirmation screen displayed on a display input section;
Fig. 21 shows a schematic diagram of a pre-viewing screen displayed on a display input section;
Fig. 22 shows a schematic diagram of an output-allotment information confirming screen displayed on a display input section;
Fig. 23(A) shows a schematic diagram of a cloth width detecting screen;
Fig. 23(B) shows a schematic diagram of a feed adjusting and print back-and-forth position adjusting screen;
Fig. 24 shows a schematic diagram of a normal maintenance screen displayed on a display input section;
Fig. 25 shows a schematic diagram of a nozzle clogging detecting screen displayed on a display input section; and
Fig. 26 shows a schematic diagram of a head cleaning screen displayed on a display input section.

In the following description, like parts are designated by like reference numbers throughout the several drawings.

### DETAILED DESCRIPTION OF THE PREFERRED EMBODIMENT

The examples of an image-processing apparatus, an image-recording apparatus and an image-recording system, which are embodied in the present invention, will be detailed in the following.

Initially, the configuration of the image-recording system provided with the image-processing apparatus and the image-recording apparatus will be detailed in the following.

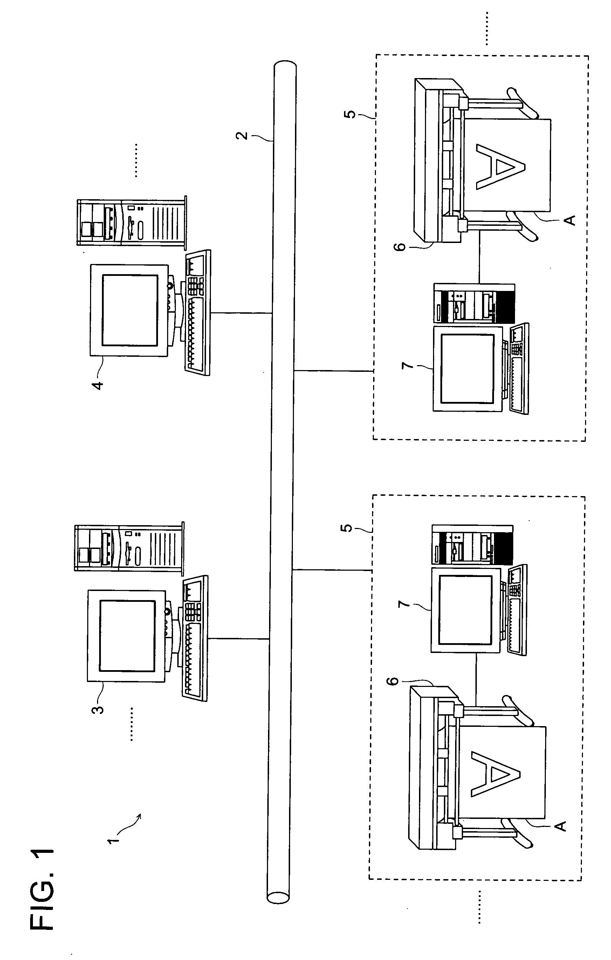

Fig. 1 shows a block diagram of an image-recording system employing an image-processing apparatus, embodied in the present invention. In image-recording system 1, image-information transmitting apparatus 3 for transmitting image information corresponding to an image to be recorded onto recording medium "A", information terminal device 4 for monitoring a production state and image-recording apparatus 5 for recording the image onto recording medium "A", based on the image information received from image-information transmitting apparatus 3, are coupled to each other through network 2, such as a LAN (Local Area Network), Internet, etc. Further, image-recording apparatus 5 is provided with recording apparatus 6 and image-processing apparatus 7 that receives the image information transmitted from image-information transmitting apparatus 3 and controls recording apparatus 6 so as to record the image onto recording medium "A", based on the image information received.

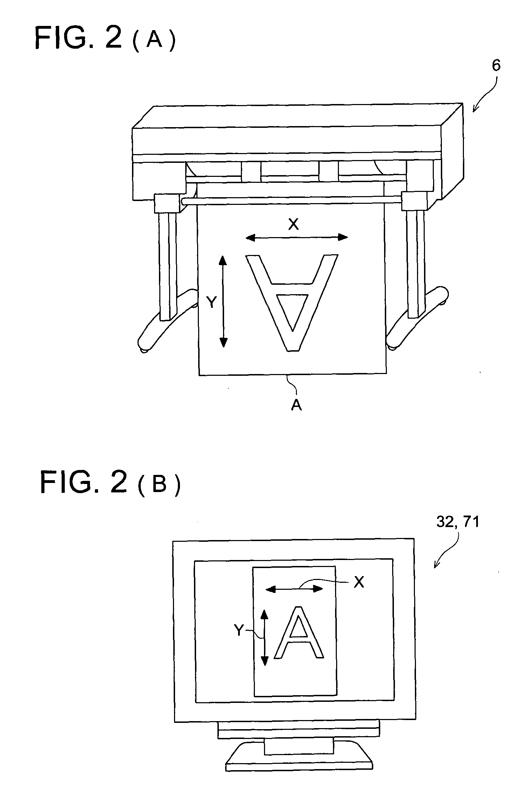

In the following, a case in which an ink-jet printer, serving as recording apparatus 6, is employed for textile-printing an image onto recording medium "A", such as clothes or the like. Incidentally, as shown in Figs. 2(A) and 2(B), with respect to the direction and the scanning direction of the image printed on recording medium "A" (refer to Fig. 2(A)) or the image displayed on display 32 or display display input section 71 of image-processing apparatus 7, etc. (refer to Fig. 2(B)), the direction indicated by arrow X is defined as a horizontal direction or a main-scanning direction, while the direction indicated by arrow Y is defined as a vertical direction or a sub-scanning direction in the present specification.

Next, the configuration of image-information transmitting apparatus 3 will be detailed in the following.

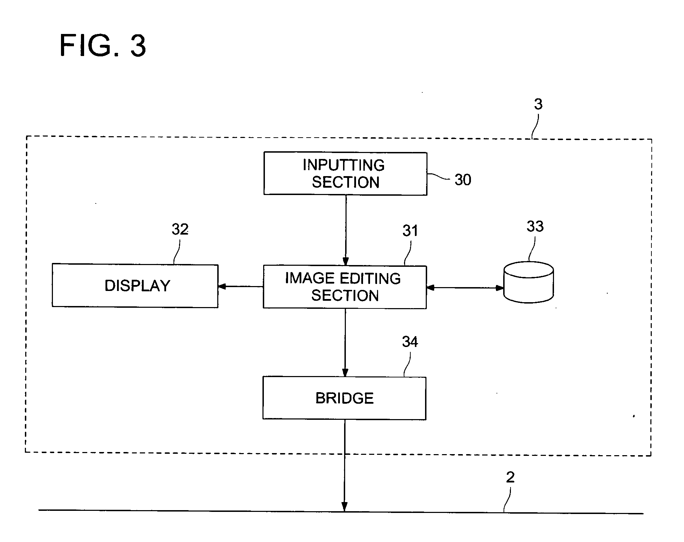

Fig. 3 shows a block diagram of the configuration of the image-information transmitting apparatus. Although, for instance, a computer in which software for required image editing operations are installed could be employed as image-information transmitting apparatus 3, it is also possible to configure it as an independent apparatus equipped with an exclusive CPU.

An inputting section 30 of image-information transmitting apparatus 3 reads the image information corresponding to the image, to be used for an image-recording job to record the image onto recording medium "A". The inputting section 30 corresponds to a driving device of information recording medium or an image-reading device, such as MO, CD-R, DVD-R, etc. From such the information recording medium, inputting section 30 reads the image information, which are written in a format of a TIFF, a BMP or a JEPG, etc. with a color space of a RGB, an index color, a YMCK or a Lab, etc. Other than the above, as a method for inputting the image information into inputting section 30, it is also possible, for instance, to acquire the image information created by another computer through the network, etc., or to directly create the image information within image-information transmitting apparatus 3.

The inputting section 30 is coupled to image editing section 31 to which display 32, such as a monitor, etc., is further coupled. The image editing section 31 allows an operator to edit the image information so as to create the image to be employed for the image-recording job performed in image-recording apparatus 5. The image editing section 31 also allows the operator to conduct various kinds of image editing functions, such as an image creating function of repeated images, a pasting function, an automatic image arrangement, a repeating function, etc. Although those functions are unique to the textile-printing operation, it is possible to provide other functions as needed.

The image creating function of repeated images is such a function for editing the image information so that no contradiction occur when the images based on the image information are arrayed in both the horizontal direction and the vertical direction. For instance, when a semicircle pattern of waterdrops is formed at an edge portion of a repeated waterdrop pattern and there is no semicircle image at an opposite edge portion, a corresponding semicircle pattern is created at the opposite edge portion.

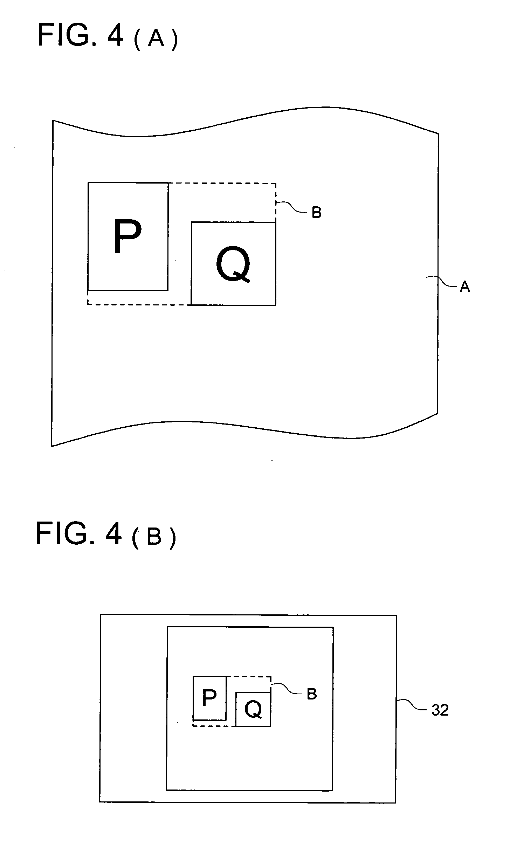

The pasting function is such a function for arranging two images at most so as to edit the image information for recording the images onto recording medium "A". Its main purpose is to determine the arrangement of the images to be recorded on recording medium "A" as a sample printing after applying the color adjustment. Further, for instance, in order to record images P, Q in a specific arrangement as shown in Fig. 4(A), the pasting function is the function for editing image information corresponding to image P and image information corresponding to image Q. As shown in Fig. 4(B), after the two image-information sets mentioned in the above are selected and the color adjustment for images P, Q are conducted on the screen of display 32 in image-information transmitting apparatus 3, and then, the arrangement of two images are determined, the image information for one image block and the layout information including disposing information of images P, Q are created so as to fit to image block "B" being a minimum rectangular area which includes images P, Q. Although the case of arranging two images at most is exemplified in the above, it is also possible to configure the system so as to conduct a pasting operation for more than three images.

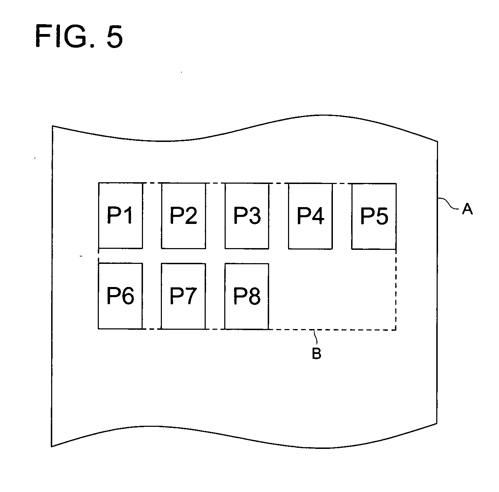

The automatic arranging function is such a function for selecting eight images at most and automatically arranging them so as to match the arranged image with the width of recording medium "A". Its main purpose is to create an arrangement of color samples. Further, for instance, in order to record images P1 - P8 in a parallel arrangement as shown in Fig. 5 onto recording medium "A", the automatic arranging function is such the function for editing eight image-information sets corresponding to images P1 - P8. When the eight image information sets are selected, images P1 - P8, each of which corresponds to each of the eight image information sets, are automatically displayed in parallel on the screen of the display 32 of image-information transmitting apparatus 3, (not shown in the drawings), and then, the arrangement of them are modified corresponding to image sizes, a number of images and a width of the cloth so that all of the color samples are included within the width of the cloth. Then, after the arrangement of the images is determined, the layout information including disposing information of images P1 - P8 for one image block are created within image block "B" being a minimum rectangular area which includes images P1 - P8 (refer to Fig. 5). It is also possible to automatically display both image P1 corresponding to any one of the image-information sets and images P2 - P8 whose color arrangements are different from that of image P1 and different from each other, while having the same image pattern as that of image P1. Incidentally, although the case that the image sizes of images P1 - P8 are the same relative to each other is exemplified in Fig. 5 for convenience' sake, it is also possible to configure the system so as to automatically arrange the images having the different image sizes as they are, or to automatically arrange the images having the same image size after converting the horizontal and vertical lengths of each of the images so as to unify the image size. Further, since about eight color samples at most are created in the usual case in the textile-printing field, the case of selecting eight color samples is indicated in the above. It is also possible, however, to configure the system so as to automatically arrange far more images, compared to the above.

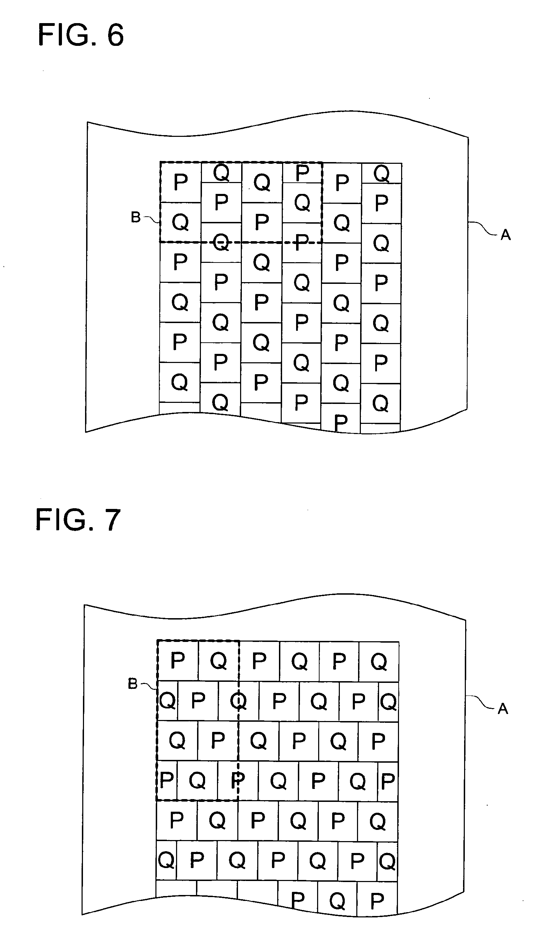

The repeating function is such functions for selecting two images at most so as to repeatedly arrange the images in the vertical direction or the horizontal direction, or so as to repeatedly arrange the images in a zigzag pattern. When repeating the images in the vertical direction or the horizontal direction, it is possible to repeat the images, while shifting them by 1/2 or 1/3 of their size relative to each other. When images P, Q are repeatedly printed onto recording medium "A" in such a manner that images P, Q are shifted by 1/2 of their size in a right-lower direction as shown in Fig. 6, by selecting two image information sets, images P, Q corresponding to the two image information sets are displayed on display 32 of image-information transmitting apparatus 3. Then, when the spaces between images P, Q, (in the case shown in Fig. 6, both are 0mm), the state of the right-lower direction, the shift amount of 1/2, etc. are inputted and established, images P, Q are displayed in a state of staggering in the vertical direction and of repeatedly shifting by 1/2 in a right-lowering manner in the horizontal direction. Further, new image information corresponding to image block B necessary for the repetition including images P, Q are generated and layout information for one image block including disposing information of images P, Q are created. As aforementioned, it is possible to repeatedly arrange them, and further, to shift them relative to each other. Fig. 7 shows a case in which images P, Q are staggered in the horizontal direction and shifted in a right direction. In this case, image block B is indicated by the area surrounded by the dotted line shown in Fig. 7, and new image information corresponding to this one block are created, and further, layout information for one image block including disposing information of images P, Q within image block B are created.

Although images P, Q having the same size are exemplified in Fig. 6 and Fig. 7 for convenience' sake, it is possible to employ images P, Q having sizes different from each other for such the repetition case. For instance, it is possible to configure image editing section 31 so as to conduct the repeating operation after the sizes of images P, Q having sizes different from each other are converted to those having the same sizes by converting the sizes of image Q in the vertical direction and the horizontal direction to those of image P, by matching the shorter length among the lengths of images P, Q in the vertical direction and the horizontal direction to the longer length of them, or conversely, by matching the longer length among the lengths of images P, Q in the vertical direction and the horizontal direction to the shorter length of them. Although the case of disposing at most two images is exemplified in the above, it is possible to configure image editing section 31 so as to conduct the pasting operation of more than three images.

As shown in Fig. 3, storage section 33, such as the HDD (Hard Disc Drive), etc., is coupled to image editing section 31. The layout information and image information edited or created in image editing section 31 are stored in storage section 33 as it is or in a form of reversibly-compressed data. When the image information are stored in storage section 33, the disposing information, etc. are written in the header portion of the image information. Further, a simple printer (not shown in the drawings) for confirming the edited image, etc. could be coupled to image editing section 31.

A bridge section 34 is also coupled to image editing section 31 so as to make it connectable to network 2. Namely, image-information transmitting apparatus 3 is coupled to network 2 through bridge section 34. The layout information and image information edited or created in image editing section 31 are transmitted to image-processing apparatus 7 of image-recording apparatus 5 (refer to Fig. 1) through bridge section 34.

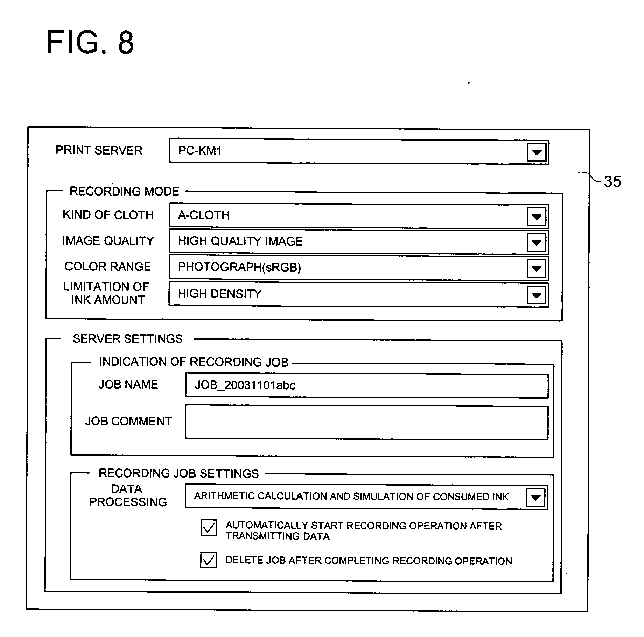

Based on the disposing information included in the image information and the layout information, it is possible for bridge section 34 to establish conditions for the image-recording operation to be performed in image-recording apparatus 5 of image-processing apparatus 7, which records the image onto recording medium "A". Fig. 8 shows an exemplified arrangement of a setting screen, which is displayed on the displaying device of the image-information transmitting apparatus when calling bridge section 34.

According to the setting screen 35, it is possible to select a specific image-processing apparatus 7 of image-recording apparatus 5, to which the image information and the layout information are transmitted so as to perform the image-recording job, out of a plurality of image-processing apparatus 7 coupled to network 2. Namely, bridge section 34 conducts a broadcasting operation for network 2. Concretely speaking, bridge section 34 distributes predetermined format data among specific TCP/IP ports of all apparatuses coupled to network 2. When image-processing apparatus 7 receives the predetermined format data from the predetermined TCP/IP port, image-processing apparatus 7 sends back its own name and IP address cord as a right response. If bridge section 34 recognizes a specific image-processing apparatus 7, which sends back the right response, bridge section 34 determines it as the predetermined image-processing apparatus 7. Accordingly, it becomes possible for bridge section 34 to recognize the image-recording apparatus 5 under operation and to urge the user of image-information transmitting apparatus 3 (namely, a client, detailed later) to conduct a selecting operation. By pushing the pull-down button of the "PRINT SERVER" column ("PRINT SERVER" serving as an image-processing apparatus) indicated in the setting screen 35, a list of image-processing apparatuses 7 coupled to network 2 will be emerged.

In the "RECORDING MODE" column of setting screen 35, it is possible to designate a kind of cloth, a quality of recording image, a color range and a limitation of ink amount. Further, in the "SETTING OF SERVER" column, it is possible to fill the name of job and job-comments to the manager who controls the job names and image-recording jobs. Still further, in the "SETTING OF RECORDING JOB" column, it is possible to establish whether or not simulations of arithmetic calculations with respect to processing operations for image information, etc. and an amount of consumed ink should be conducted, an automatic commencement of image-recording operation after transmitting the image information by using the check box and an automatic deletion of image-recording job after the image-recording operation is completed.

The simulation of an amount of consumed ink is to conduct arithmetic calculations for estimating an amount of ink of each color, consumed for the image-recording operation in a unit length or a unit area or in all over the image-recording operation when the image-recording operation for recording medium "A" is conducted on the basis of the image information, from dot image data converted so as to be recordable for recording medium "A" by applying arithmetic calculating operation to the image information. The simulation of an amount of consumed ink is conducted in image-processing apparatus 7 of image-recording apparatus 5 selected by using setting screen 35, as detailed later.

Further, it is possible to establish the image-recording conditions still in detail as options to be established in setting screen 35. For instance, it is possible to determine whether the image-recording operation should be conducted all over the cloth, serving as recording medium "A", or the length of the cloth to be recorded should be designated, with respect to the vertical and horizontal directions of the cloth for which the reestablishment of recording operation is possible, or to determine whether or not a number of patterns (that means images P, Q arrayed in a vertical direction as for the aforementioned repeated arrangement in the vertical direction, while that means images P, Q arrayed in a horizontal direction as for the aforementioned repeated arrangement in the horizontal direction) and the distance between patterns should be designated for the image-recording operation. Further, other than the above, various kinds of options could be established. Incidentally, the "image-recording operation for all over the cloth" is to repeatedly record the patterns up to the full length of the cloth size. Accordingly, when the "image-recording operation for all over the cloth" in the vertical direction is established, recording apparatus 6 will continue the image recording operation until the end of the cloth is detected.

When such the detailed processing contents of the image recording operation are established as aforementioned, bridge section 34 writes those contents into the layout information so as to output the layout information and the image information onto network 2.

The information terminal device 4 (refer to Fig. 1) is a terminal device for monitoring the production state. For instance, a computer in which production-monitoring software is installed as needed, is employed as information terminal device 4, as well as in the case of image-information transmitting apparatus 3. It is also possible, however, to configure it as an apparatus having an exclusive CPU. Further, by installing the production-monitoring software in the computer employed as image-information transmitting apparatus 3, the same computer is configured so as to work as both image-information transmitting apparatus 3 and information terminal device 4.

The information terminal device 4 is equipped with a displaying device, such as a monitor, etc., (not shown in the drawings). The information terminal device 4 transmits an inquiry signal for inquiring the production state, namely a status of the image-recording operation performed in recording apparatus 6, an inputting status of the image-recording job, a progress status of arithmetic calculations, etc. performed in image-processing apparatus 7, to image-processing apparatus 7 selected by using setting screen 35 (refer to Fig. 8) of image-information transmitting apparatus 3, so as to receive information in regard to the length of the recorded cloth, the elapsed time of the image-recording operation, the time of commencing the image-recording operation, the expected time of finalizing the image-recording operation, the residual amount of ink, the residual amount of cloth, the error contents, the error avoiding method, etc., from image-processing apparatus 7, and displays them on the screen of the displaying device.

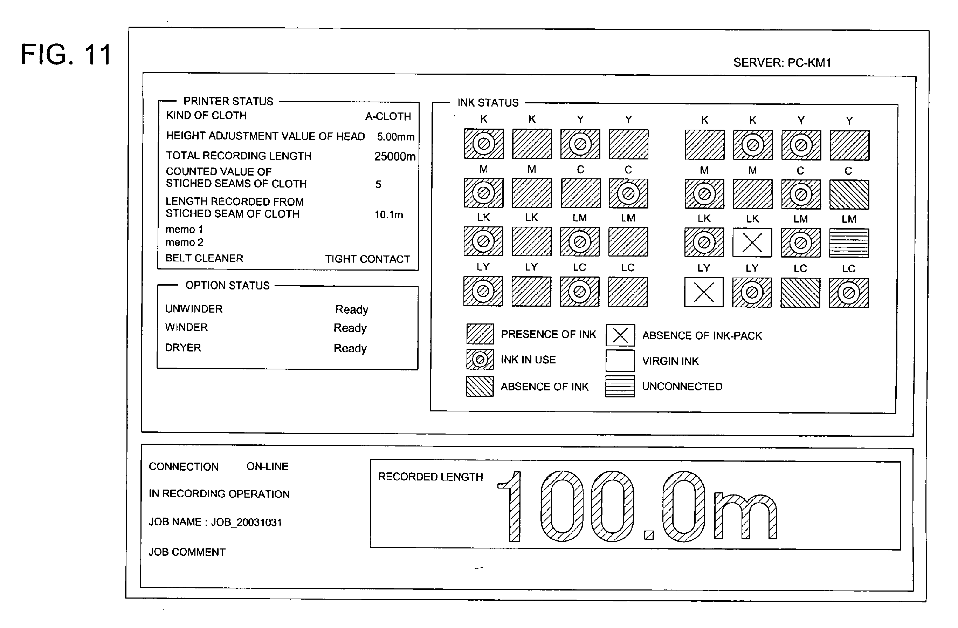

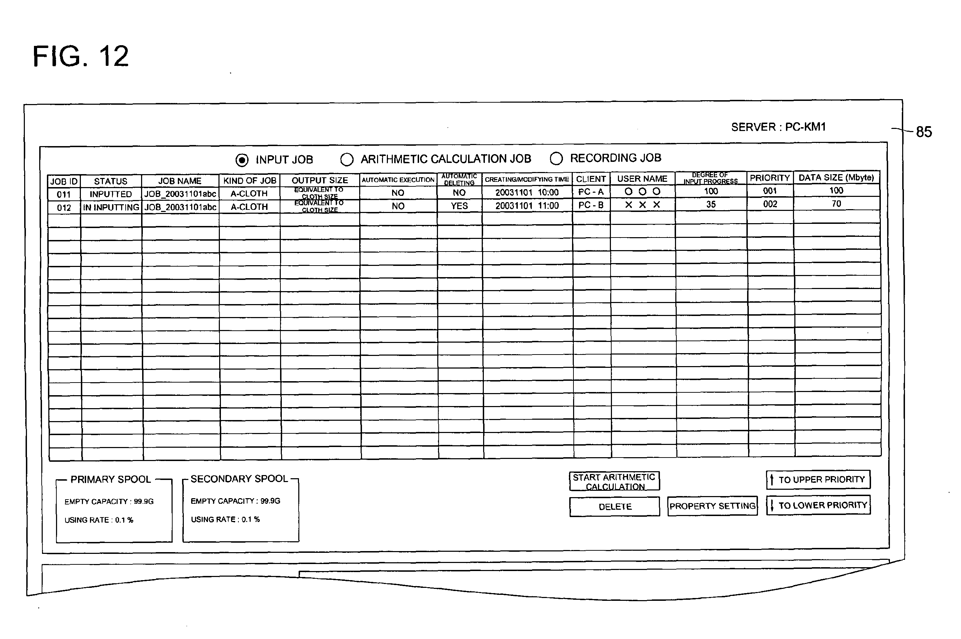

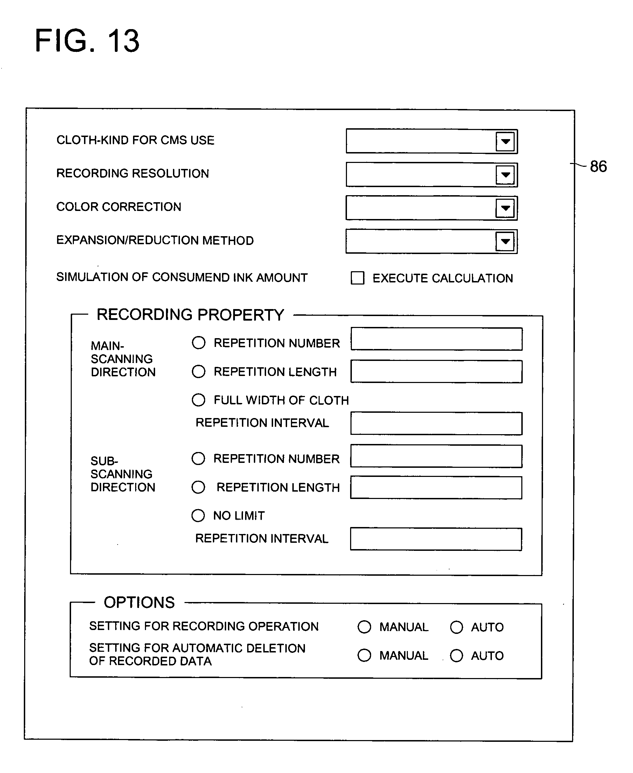

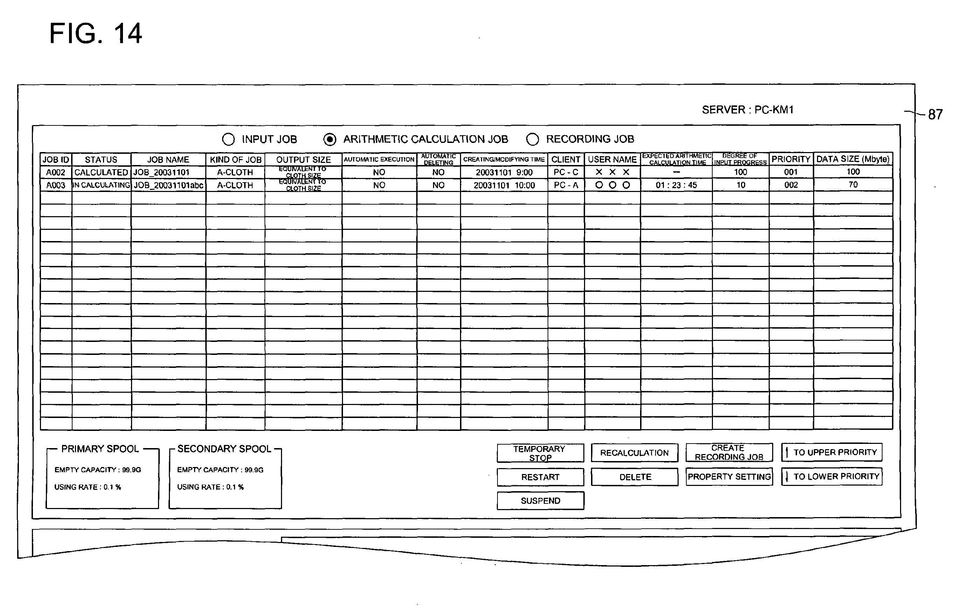

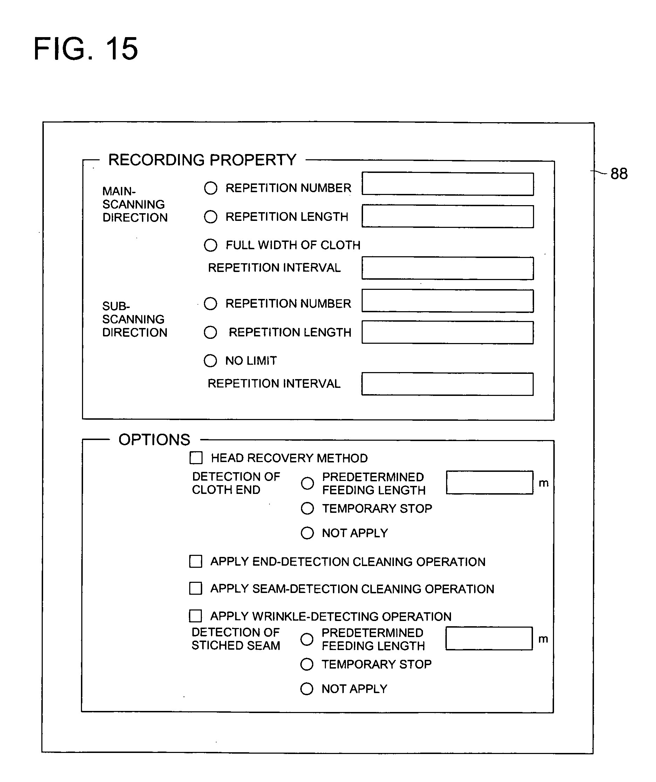

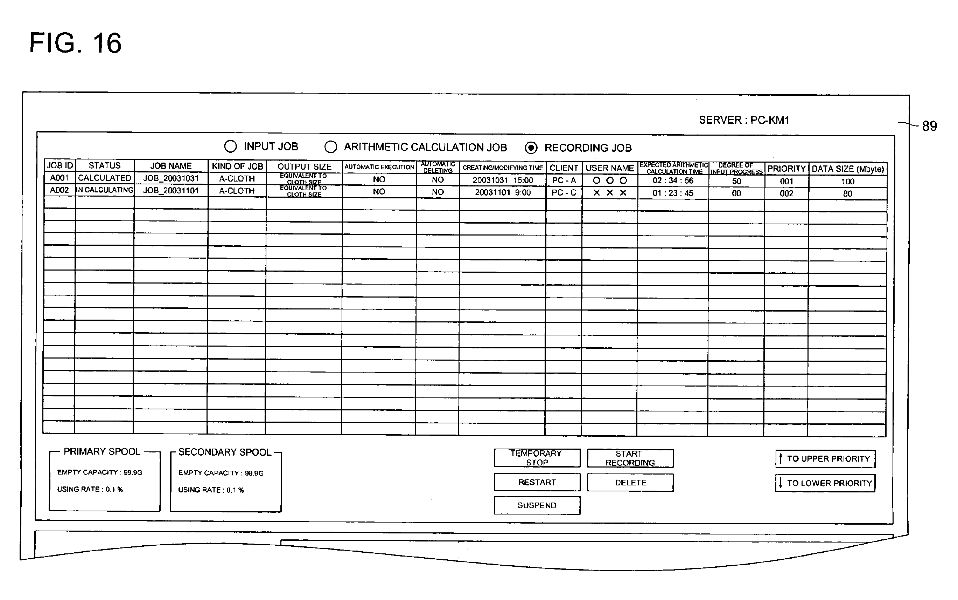

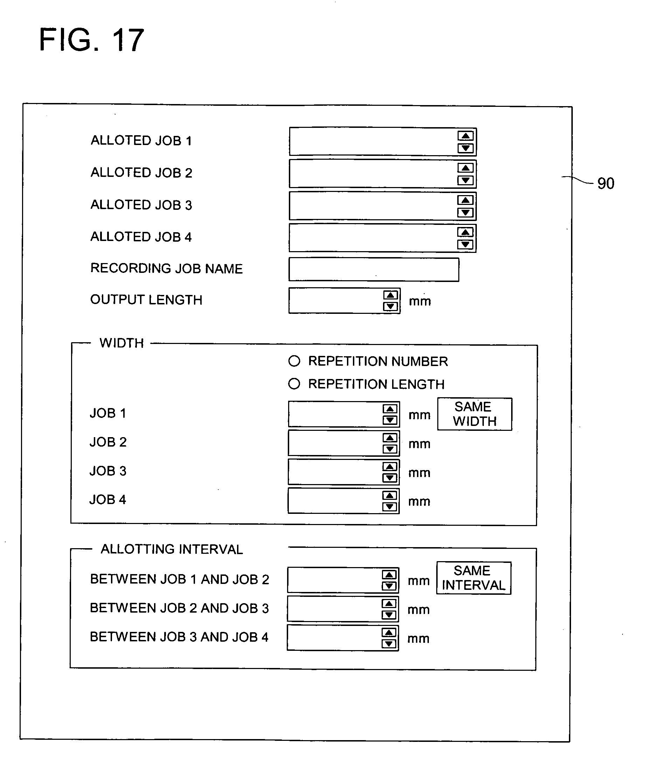

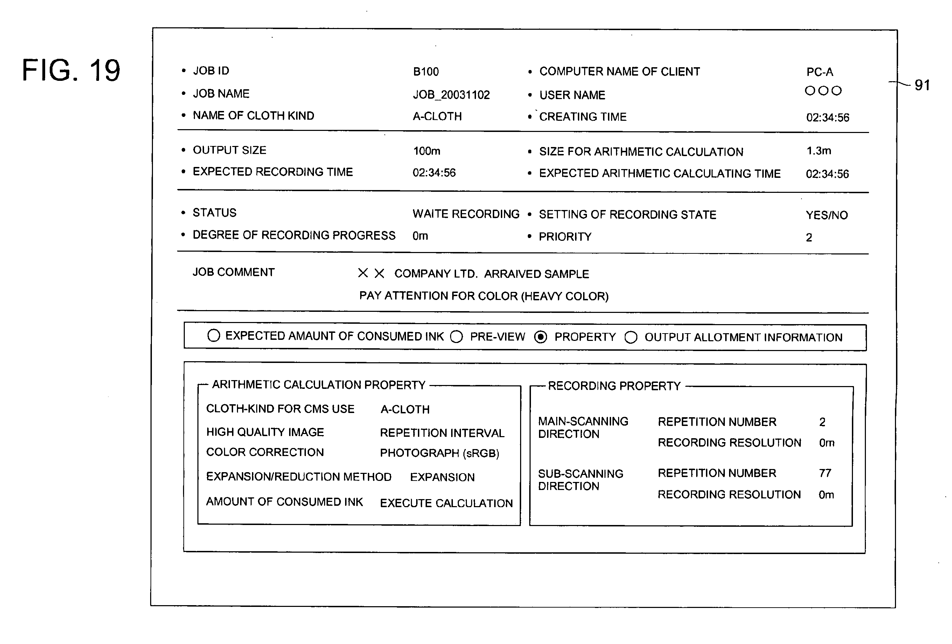

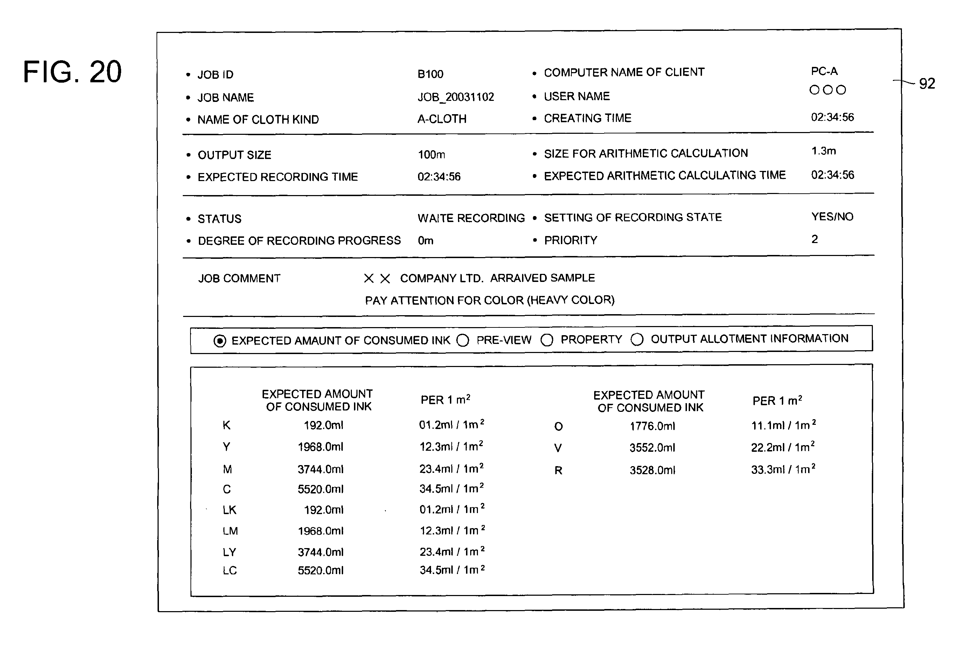

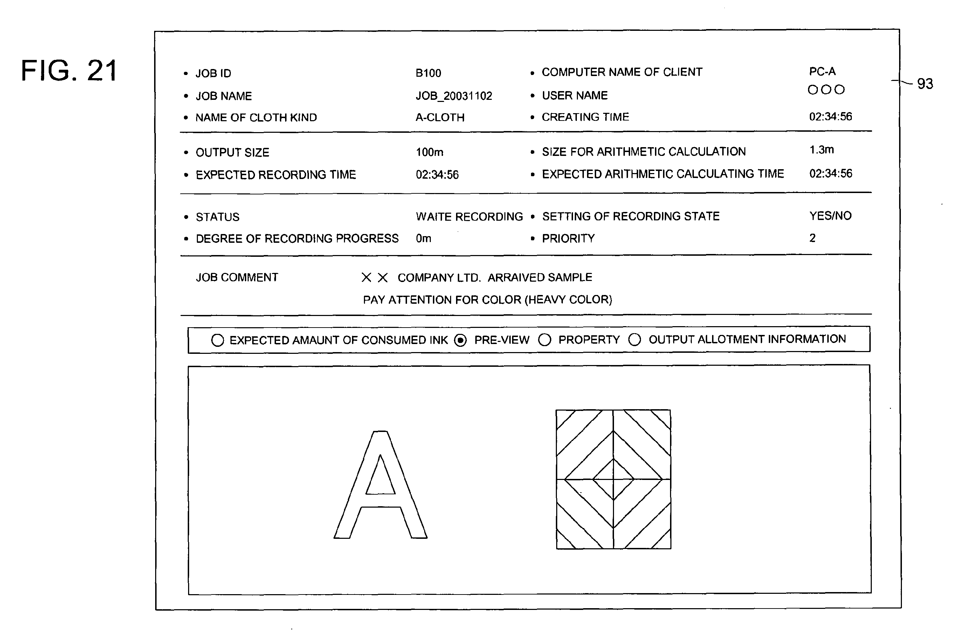

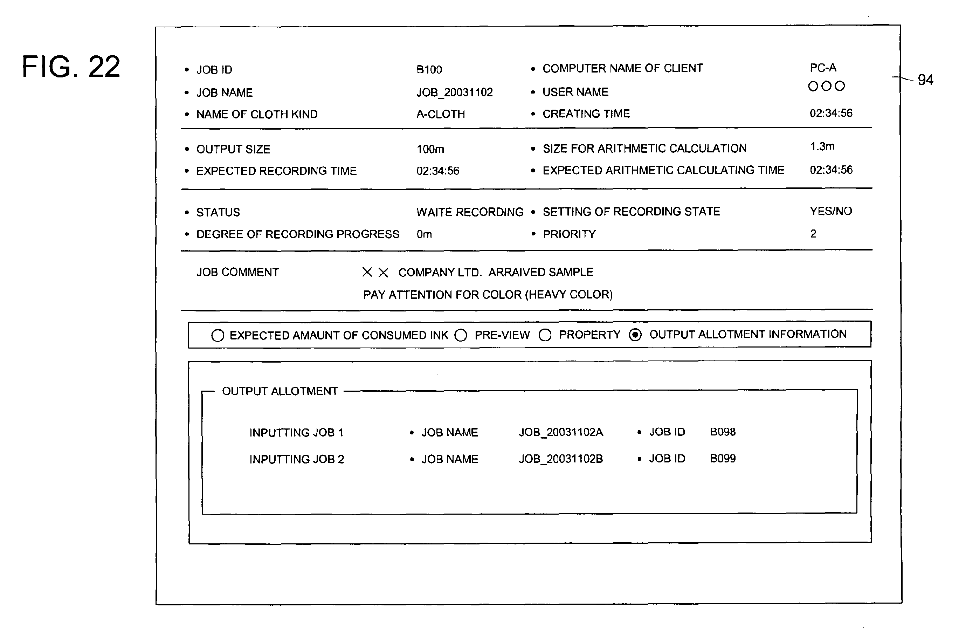

Other than the residual amount of ink and the residual amount of cloth in image-recording apparatus 5 provided with image-processing apparatus 7 selected, the displaying device of information terminal device 4 displays such screens as equivalent to those displayed on display 32 of image-information transmitting apparatus 3 and on display input section 71 of image-processing apparatus 7, detailed later, such as setting screen 35 (refer to Fig. 8), printer screen 84 (refer to Fig. 11), inputted job screen 85 (refer to Fig. 12), arithmetic calculation property screen 86 (refer to Fig. 13), arithmetic calculation job screen 87 (refer to Fig. 14), recording property setting screen 88 (refer to Fig. 15), recording job screen 89 (refer to Fig. 16), output allotment setting screen 90 (refer to Fig. 17), property confirmation screen 91 (refer to Fig. 19), expected amount of consumed ink confirmation screen 92 (refer to Fig. 20), pre-viewing screen 93 (refer to Fig. 21), output allotment information confirming screen 94 (refer to Fig. 22), etc. Further, it is also possible for the displaying device of information terminal device 4 to display not only the production state of image-recording apparatus 5 selected in the aforementioned manner, but also the other production states of all image-recording apparatuses 5 coupled to information terminal device 4 through network 2.

Incidentally, information terminal device 4 is used for confirming those information. Therefore, it is impossible for the user to change or modify the setting contents displayed on the screen of information terminal device 4. The image-recording system 1 is so constituted that the setting contents of the information can be changed or modified in image-information transmitting apparatus 3 or image-processing apparatus 7 detailed later. The reason why the changing operation of the setting contents for image-recording apparatus 5 and the working commands for recording apparatus 6 are prohibited in information terminal device 4 lies on the fact that, since such the terminal devices are generally located at remote sites apart from image-recording apparatus 5, and therefore, it is impossible to accurately grasp the present state of recording apparatus 6, namely, a conveying status, accurate statuses of an unwinder, a dryer, a winder, etc. of recording medium "A" detailed later, there is a fear that a remote controlling operation through network 2 would cause unnecessary image-recording operation and/or would cause the damage of the head of the ink-jet printer. It would become possible, however, to conduct the remote controlling operation by equipping the monitoring device, etc. into recording apparatus 6, the unwinder, etc.

The configuration of image-recording apparatus 5 will be detailed in the following.

As shown in Fig. 1, image-recording apparatus 5 is provided with recording apparatus 6 and image-processing apparatus 7 that receives the image information transmitted from image-information transmitting apparatus 3 through network 2 and controls recording apparatus 6 so as to record the image onto recording medium "A", based on the image information received.

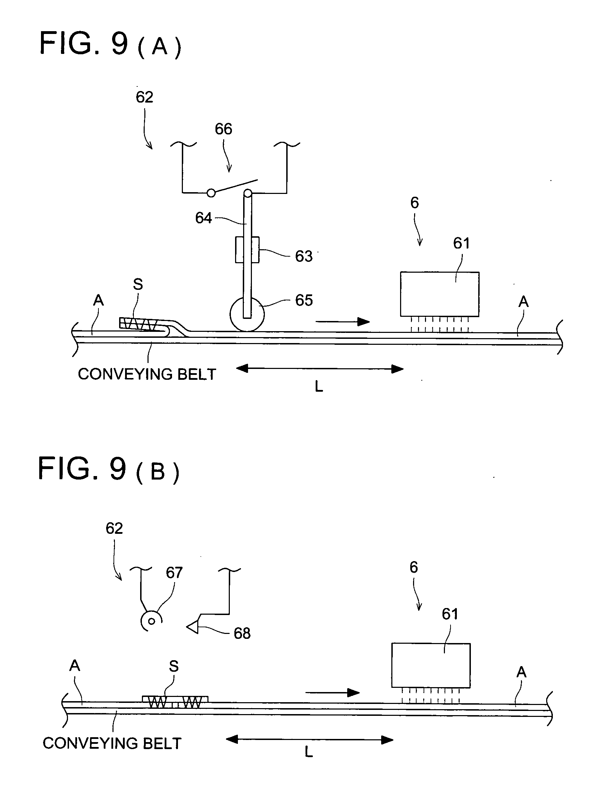

As aforementioned, the ink-jet printer of the serial head method is employed as recording apparatus 6. The recording apparatus 6 is equipped with total 16 heads including two sets of 8 heads (not shown in the drawings) each of which emits ink particles toward recording medium "A", and is provided with carriage 61 (refer to Fig. 9(A) and Fig. 9(B)), which is movable back and forth on recording medium "A" in the main-scanning direction. Two ink-packages are mounted on each of the heads, and an ink set of yellow (Y), magenta (M), cyan (C), black (K), a combination of this ink set and a light YMCK set, or a combination of this ink set and a specific color ink, such as orange, violet, red are available for recording apparatus 6.

As shown in Fig. 9(A), detecting section 62 for detecting stitched seam "S" of the cloth, serving as recording medium "A" is disposed at an upstream side in a conveying direction of recording medium "A" with respect to the head mounted on carriage 61 of the ink-jet printer, serving as recording apparatus 6. When detecting section 62 detects stitched seam "S" of recording medium "A", recording apparatus 6 moves carriage 61 to a saving position in the main-scanning direction and feeds the cloth by a predetermined feeding length, after completing the image-recording operation for distance L from detecting section 62 to carriage 61. Then, recording apparatus 6 could resume the ink-jet printing operation by retuning carriage 61 from the saving position to a recording position above recording medium "A". The predetermined feeding length of recording medium "A" in the abovementioned case varies depending on a stitching method of recording medium "A". Accordingly, such the predetermined feeding length can be established for every image-recording job by using the recording property setting screen 88 displayed on display input section 71 of image-processing apparatus 7.

The detecting section 62 has a stick-type detecting member 64, which is movable up and down along guide 63. A roller 65, which contacts the cloth and rotates in a state of matching with the conveying action of the cloth, is attached to the lower end of detecting member 64. Further, an electric contact-point structure 66, which is electrically coupled to image-processing apparatus 7, is disposed above the upper end of detecting member 64. Since the portion of stitched seam "S" is thicker than the other portion, roller 65 is pushed upward when stitched seam "S" contacts roller 65. In conjunction with such the action, detecting member 64 moves upward to turn ON electric contact-point structure 66, resulting in a detection of stitched seam "S".

As shown in Fig. 9(B), detecting section 62 would possibly includes ultraviolet-rays irradiating lamp 67 and photo-detector element 68, which are electrically coupled to image-processing apparatus 7. This detecting section 62 is also disposed at substantially the same position as that shown in Fig. 9(A) with respect to the head. The ultraviolet-rays irradiating lamp 67 is disposed at such a position and in such a direction that the ultraviolet-rays can be irradiated onto the cloth serving as recording medium "A". In addition, photo-detector element 68 is disposed at such a position and in such a direction that the fluorescence emitted from the cloth can be received. According to this detecting section 62, when stitched seam "S" is stitched with a string including fluorescent dye, it becomes possible to detect stitched seam "S" by detecting the fluorescence emitted from the string of stitched seam "S" and caused by the ultraviolet-rays irradiated by ultraviolet-rays irradiating lamp 67.

It is also possible to dispose a plurality of detecting sections 62, each shown in Fig. 9(A) or Fig. 9(B), along the width direction (namely, the main-scanning direction) of recording medium "A". Further, it is also possible to employ detecting section 62, which employs a detecting method other than those indicated in Fig. 9(A) or Fig. 9(B), for detecting the stitched seam portion and the end portion of the cloth. Still further, recording apparatus 6 is provided with a storage section, including a memory, etc., (not shown in the drawings) which stores a number of the stitched seams of recording medium "A" detected by detecting section 62 and a length of cloth on which the images are recorded from the stitched seam.

The recording apparatus 6 is provided with a wrinkle detecting structure (not shown in the drawings) for detecting a wrinkle of the cloth. Further, recording apparatus 6 is also provided with a cleaning structure for resuming an ink-emitting function of a nozzle by wiping the nozzles included in the heads and by sucking ink from a nozzle, the ink-emitting function of which is deteriorated due to a jam of the ink (namely, in a state of nozzle clogging), to forcibly eject jammed ink.

The recording apparatus 6 is the ink-jet printer that conducts the image-recording operation while conveying the cloth, serving as recording medium "A", put on a conveying belt. Although the concrete configuration of the ink-jet printer is not shown in the drawings, an endless conveying belt (not shown in the drawings), for conveying recording medium "A" put on its obverse side, is equipped below the carriage onto which the head is mounted in a state of being supported from its reverse side by a plate-shaped platen. Various kinds of rollers, such as a driving roller, a guide roller, a tension roller, etc., contact the conveying belt below both sides of the platen. Further, a belt cleaner for cleaning the surface of the conveying belt contacts the conveying belt detachably from the outside of the conveying belt. A plurality of the belt cleaners could be provided as needed.

An unwinder (not shown in the drawings) for unwinding the scrolled recording medium "A" is disposed upstream in the conveying direction of recording medium "A" of recording apparatus 6. A dryer for drying recording medium "A" on which the image is just recorded and a winder for winding recording medium "A" dried by the dryer (both not shown in the drawings) are disposed downstream in the conveying direction of recording medium "A" of recording apparatus 6.

Next, the configuration of image-processing apparatus 7 of image-recording apparatus 5 will be detailed in the following.

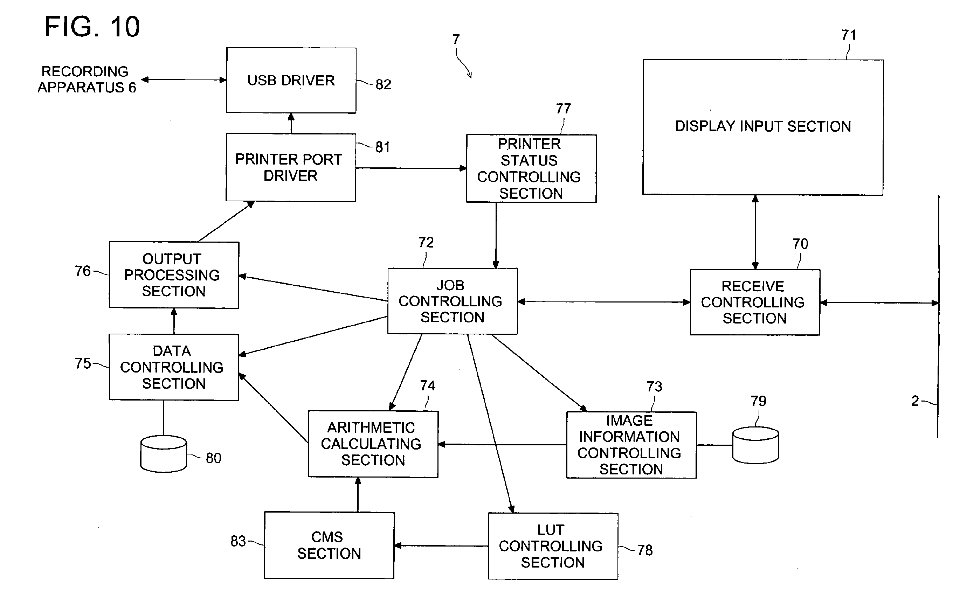

Fig. 10 shows a block diagram of the configuration of image-processing apparatus 7. For instance, a computer into which the necessary software is installed could be employed as image-processing apparatus 7 as well as in the case of image-information transmitting apparatus 3. It is also possible, however, to configure it as an apparatus equipped with an exclusive CPU.

A receive controlling section 70 is coupled to network 2, to receive the image information and the layout information, which are employed for the image-recording job to record the corresponding image onto recording medium "A", through network 2. The display input section 71 provided with the monitor, etc. is coupled to receive controlling section 70. The TCI/IP protocol is employed for the communication between receive controlling section 70 and display input section 71. The display input section 71 displays a list of contents of the image-recording jobs, and allows the user to input a processing command for every image-recording job.

The receive controlling section 70 is coupled to job controlling section 72 for controlling various kinds of processing to be performed in image-processing apparatus 7. Other than receive controlling section 70, image information controlling section 73, arithmetic calculating section 74, data controlling section 75, output processing section 76, printer status controlling section 77 and LUT (Look Up Table) controlling section 78 are coupled to job controlling section 72.

When job controlling section 72 receives a request of processing from display input section 71, job controlling section 72 controls image information controlling section 73 and other sections concerned so as to conduct the requested processing, and at the same time, receives necessary information from the sections concerned to send the received information back to display input section 71 through receive controlling section 70. Further, when the inquiry signal for inquiring the production state is transmitted from information terminal device 4 (refer to Fig. 1), job controlling section 72 makes the printer status controlling section 77 to acquire a status of recording apparatus 6, namely, a recorded length, a residual amount of ink, contents of an error, etc., and to notify of them, and then, sends the acquired information back to information terminal device 4 through receive controlling section 70 and network 2. As aforementioned, the displaying device of information terminal device 4 displays the screens same as those displayed in image-processing apparatus 7, such as printer screen 84 detailed later (refer to Fig. 11), etc. When responding to the abovementioned inquiry signal, job controlling section 72 also sends information necessary for displaying the screens to information terminal device 4.

An image information storage section 79 for storing the image information and the layout information, which are received by receive controlling section 70 and are sent through job controlling section 72, for every image-recording job is coupled to image information controlling section 73.

The image information controlling section 73 controls the contents of data stored in image information storage section 79. When storing the image information, etc. into image information storage section 79, the image information controlling section 73 creates a unique job ID being different from the aforementioned job name, so as to control the image information and the layout information by correlating them with the job ID. This job ID, etc. are sent to display input section 71 through job controlling section 72, etc., so as to display them on the displaying device. Further, when the image information controlling section 73 receives a command for deleting a specific image-recording job from display input section 71, the image information controlling section 73 deletes the image information and the layout information, correlated with the job ID of the image-recording job concerned, from the image information storage section 79. Still further, the image information controlling section 73 controls an empty capacity and a using rate of the image information storage section 79. Incidentally, the system is so constituted that the job ID created by the image information controlling section 73 is sent back to image-information transmitting apparatus 3, which originally transmitted the image information, etc. concerned, through job controlling section 72 and receive controlling section 70.

Other than job controlling section 72 and the image information storage section 79, arithmetic calculating section 74 is coupled to the image information controlling section 73. Further, data controlling section 75 is coupled to arithmetic calculating section 74.

The arithmetic calculating section 74 applies an arithmetic calculation processing to the image information so as to covert them to image data recordable for recording medium "A". In response to the command sent from job controlling section 72, which received the command for conducting the arithmetic calculation processing for a specific image-recording job from display input section 71, arithmetic calculating section 74 reads the image information correlated with the job ID concerned from the image information storage section 79 through image information controlling section 73. Then, arithmetic calculating section 74 applies the arithmetic calculation processing, such as a color transform, an enlargement, an error diffusion, etc., to the image information concerned so as to covert them to the dot image data recordable for recording medium "A". Further, arithmetic calculating section 74 applies the reversible compression processing, which employs the "run length method", to the dot image data, in order to store the compressed dot-image data for every image-recording job into data storage section 80 like a hard disc drive. Incidentally, as the method for quantizing the image information, a combination of such the error diffusion method and another method would be applicable. Further, when reducing the image information, it is possible that the processing is conducted in order of the reduction, the color conversion and the error diffusion. Still further, it is applicable that a semiconductor mass-memory, having a function of maintaining the memory contents even when the power source is turned OFF (namely, a nonvolatile mass-memory), is employed for data storage section 80.

Further, when the simulation of the consumed amount of ink is selected as a data processing by using setting screen 35 displayed in bridge section 34 of image-information transmitting apparatus 3 as shown in Fig. 8, arithmetic calculating section 74 calculates an amount of ink estimated from a number of ink dots (equivalent to a number of ink particles consumed), namely, the expected amount of ink consumed, after completing the arithmetic calculation mentioned in the above. Since a volume of single ink particle is known in advance (20 pl per one ink particle), it is possible, as aforementioned, to estimate an amount of ink of each color, consumed for the image-recording job in a unit length or a unit area or in all over the image-recording job, from the number of ink dots. Still further, from the viewpoint of improving the accuracy of the simulation of the consumed amount of ink, the amount of ink is calculated from the number of dots included in the dot image data, as aforementioned. For instance, correlations between combinations of the RGB and the YMCK, etc. and color combinations of the other YMCK after applying the arithmetic calculations such as the color conversion, the error diffusion, etc., the aforementioned special color set, or the photographic mode, etc. are found for every color to create a color conversion table in advance. This makes it possible to speedily calculate the consumed amount of ink for each color from the image information represented by the combinations of the RGB, the YMCK, etc. by employing a simple three-dimensional or four-dimensional LUT calculation, without conducting the arithmetic calculations of the color conversion and the error diffusion.

The results of the simulation are stored in data storage section 80 through data controlling section 75, separately from the aforementioned data. Incidentally, since it is necessary to make a data amount of the results of the simulation (hereinafter, referred to as the simulation data) as light as possible, the simulation data is set at such a property that is different from that of the aforementioned data acquired by applying the arithmetic calculations, so that the simulation data cannot be employed for image-recording operation performed by recording apparatus 6. Further, since it is possible to designate one of "ARITHMETIC CALCULATION ONLY", "SIMULATION OF CONSUMED AMOUNT OF INK ONLY" and "ARITHMETIC CALCULATION AND SIMULATION OF CONSUMED AMOUNT OF INK" by using the "RECORDING JOB SETTING" in bridge section 34 of image-information transmitting apparatus 3 as aforementioned, there is a possibility that two data sets of the data to be employed for the image-recording operation and the simulation data acquired as the result of the simulation would be generated from a single image-recording job. Accordingly, in order to control the data and the simulation data separately from each other, a primary job ID and a secondary job ID are created respectively corresponding to the data and the simulation data in the arithmetic calculation step of arithmetic calculating section 74 so as to store them separately correlated with the primary job ID and the secondary job ID in data storage section 80.

The data controlling section 75 receives the data generated by the arithmetic calculation processing and the simulation data of consumed amount of ink so as to store them in data storage section 80 as aforementioned, and at the same time, controls the contents of data storage section 80. The aforementioned bridge section 34 (refer to Fig. 3) of image-information transmitting apparatus 3 can also conducts a part of or all of the arithmetic calculation processing to be performed by arithmetic calculating section 74. When bridge section 34 conducts such the arithmetic calculation processing, its contents are written into the header portion of the image information, etc. Accordingly, the system is so constituted that, when bridge section 34 conducts such the arithmetic calculation processing, job controlling section 72 reads the received header portion to determine that the image information are already converted into the data recordable for recording medium "A" without conducting the arithmetic calculation processing in image-processing apparatus 7 (refer to Fig. 10), and sends the image information (namely, the data, in this case) to data controlling section 75 so as to store them in data storage section 80. Further, data controlling section 75 controls an empty capacity and a using rate of data storage section 80.

Other than job controlling section 72, arithmetic calculating section 74 and data storage section 80, output processing section 76 is coupled to data controlling section 75. Further, printer port driver 81 is coupled to output processing section 76.

The output processing section 76 reads the data from data storage section 80 and successively arranges the data to output them to recording apparatus 6 through printer port driver 81. Initially, when job controlling section 72 receives a command of output processing with respect to a specific image-recording job from display input section 71, job controlling section 72 creates a output list of the data to be employed for the image-recording job concerned and to be output-processed. Then, by reading the contents of the processing for the image recording and the disposing information included in the layout information correlated to the newly generated job ID concerned, or in response to the new outputting format inputted by display input section 71, job controlling section 72 outputs an outputting command associated with the output list to output processing section 76. In response to the outputting command, output processing section 76 reads a single set of or plural sets of data from data storage section 80 through data controlling section 75, based on the output list received. Then, with respect to, for instance, the repeated arrangement in the horizontal direction (refer to Fig. 7) as aforementioned, the data sets are successively arranged by repeatedly copying the data set up to one scanning line on the memory, and the arranged data are outputted to recording apparatus 6.

Other than USB driver 82, the printer status controlling section 77 is coupled to printer port driver 81. Further, job controlling section 72 is coupled to printer status controlling section 77.

In response to a request from job controlling section 72, or at constant time intervals, the printer status controlling section 77 acquires the status information of recording apparatus 6 through printer port driver 81 and USB driver 82, and then, notifies job controlling section 72 of them.

A CMS (Color Management System) section 83 is coupled to LUT controlling section 78. In response to the arithmetic calculation processing condition from job controlling section 72, the LUT controlling section 78 and CMS section 83 respond with an appropriate LUT. As the LUT, the color conversion LUT (such as an sRGB LUT, a RGB photographic LUT, a 3DLUT for YMCK conversion use) and the liquid amount correction LUT are registered. In order to add a new LUT, information in regard to the new LUT are read from a medium inserted into image-processing apparatus 7.

Since the LUT, a bilateral correction value (detailed later) of the ink-jet printer, an adjusting value of the head height, a feeding amount, etc. for the employed CMS varies depending on a kind of the cloth, serving as recording medium "A", such the information are stored in a storage section of image-processing apparatus 7 for every kind of the cloth so as to control them. Concretely speaking, when registering a new kind of cloth in the storage section, the LUT, the bilateral correction value, etc. are stored as input information set corresponding to the new kind of cloth. In addition, the storage section has such control functions of copying and editing setting contents of a similar cloth to register it as a new kind of cloth and deleting a specific kind of cloth.

As aforementioned, the display input section 71 displays a list of contents of the image-recording jobs, and allows the user to input a processing command for every image-recording job. Further, it is possible for the display input section 71 to separately display a list of receiving statues of image-recording jobs and a list of arithmetic calculation processing statuses or output processing statuses, respectively. Based on the screen displayed by display input section 71, the receiving operation of the image information, the arithmetic calculation processing and the outputting operation, which are performed by image-processing apparatus 7, will now be detailed next.

Turning on the power source of image-processing apparatus 7, printer screen 84, indicating the state of recording apparatus 6 as shown in Fig. 11, is displayed on display input section 71. In the "PRINTER STATUS" column of printer screen 84, a kind of cloth, serving as recording medium "A", established by recording apparatus 6, a height adjusting value of the head, a total length of the recorded cloth completed from the commencement of operation by recording apparatus 6, the counted number of stitched seams detected by detecting section 62 (refer to Figs. 9(A) and 9(B)) of recording apparatus 6, a recording length of the cloth from a stitched seam, the state of the aforementioned belt cleaner of recording apparatus 6, such as the contact/released state, etc., are indicated. Further, in the "OPTION STATUS" column, for instance, the state of the aforementioned unwinder and the winder, and/or the state of the dryer and its temperature are indicated, as well. In response to the inquiry automatically sent from display input section 71 to job controlling section 72 at constant time intervals, job controlling section 72 responds with the abovementioned information, such as information in regard to recording apparatus 6, the unwinder, etc., acquired from printer status controlling section 77. Accordingly, such information are automatically revised at constant time intervals. Incidentally, in sections of "MEMO 1" and "MEMO 2", the operator can record comments, for instance, such as "this image-recording operation is a test", etc. Further, it is also possible that, when registering a kind of cloth as mentioned before, characteristics of the cloth are registered as a part of the abovementioned set of input data, and are displayed in the sections for "MEMO 1" and/or "MEMO 2".

Further, in the "INK STATUS" column located at the right of printer screen 84, with respect to the total 32 colored ink-packs, every 2 of which are mounted onto each of the 16 heads, the statuses, including the kind of ink such as YMCK, a light YMCK (indicated as LY, LM, LC, LK in the drawing), etc., presence or absence of ink in each of the ink-packs, whether or not the ink is in use, presence or absence of each of the ink-packs, whether or not ink is used, whether or not ink is connected, etc., are indicated by using colors or marks. Specifically, the status of the "ABSENCE OF INK", meaning that no ink remains though its ink-pack is present, is indicated by a red color, and the status of the "ABSENCE OF INK-PACK", meaning that the ink-pack as originally mounted is absent, is indicated by a symbol of red colored "x" on a white background, to more readily attract attention of the operator.

A column for indicating the state of recording apparatus 6 and the information of the image-recording job is located at the lower side of printer screen 84, so that the communication status, the operating status of recording apparatus 6, etc. can be indicated in the section. Further, this column is always displayed on the screen without being switched to another column even if the present screen is switched to another screen. Still further, with respect to the current image-recording job, the job name established by using setting screen 35 of bridge section 34 in image-information transmitting apparatus 3 and the job comments for the operator are indicated in this column. Still further, in the lower-right of the column, the total length of the recorded cloth completed for every image-recording operation is displayed with relatively large letters so that the operator can easily notice it. In case of an emergency, such as an occurrence of an error, etc., the color of the letters are changed to red, so as to more readily attract the attention of the operator.

Next, pushing a tag (not shown in the drawings) to switch screens, located on printer screen 84, the display input section 71 displays the status of the received image-recording jobs, as shown in Fig. 12, for every image-recording job. Namely, inputted job screen 85 is displayed. When the image information are transmitted from image-information transmitting apparatus 3 through network 2, image information controlling section 73 attaches a job ID to the image information, etc., and the job ID and the information recorded in the header portion of the image information correlating to the job ID are sent to display input section 71 in which the job ID and the information are registered. For this purpose, when the image information are transmitted to image-processing apparatus 7, the job ID corresponding to the transmitted image information, the job name of the image-recording job correlated to the job ID, the kind of cloth, the output image size, etc. are automatically added to inputted job screen 85 of display input section 71 as shown in Fig.12. In this case, the priority order of the image-recording job is initially set at the lowest line in the list of all image-recording jobs.

Further, display input section 71 transmits the receiving state of image-recording jobs to image information controlling section 73 through job controlling section 72 at constant time intervals. In response to an inquiry for the receiving state, image information controlling section 73 acquires information in regard to the progress status of storing the image information correlated to each job ID stored, from the image information storage section 79, and then, sends the acquired information back to the display input section 71. Accordingly, the items of the "DEGREE OF INPUT PROGRESS" and the "DATA SIZE (Mbyte)" in inputted job screen 85 are automatically revised at the constant time intervals. In addition, synchronized with the abovementioned action, the displayed items in the column of "STATUS" are also automatically revised at the constant time intervals.

Still further, display input section 71 makes the image information controlling section 73 and the data controlling section 75 to report the empty capacity and the using rate of the image information storage section 79 and the data storage section 80 through job controlling section 72 at constant time intervals. Then, such the results are respectively displayed on the lower left of inputted job screen 85. Incidentally, in the lower left area, information in regard to image information storage section 79 are indicated within an area indicated as "PRIMARY SPOOL", while information in regard to data storage section 80 are indicated within an area indicated as "SECONDARY SPOOL".

The buttons of "START ARITHMETIC CALCULATION", "DELETE", "PROPERTY SETTING", the "TO UPPER PRIORITY" and the "TO LOWER PRIORITY" are located at the lower-right of inputted job screen 85. Pushing the "DELETE" button after selecting a single or a plurality of image-recording job(s) in the currently displayed list of the image-recording jobs, the selected image-recording job(s) is/are deleted from the list. Accordingly, the image information, etc. correlated to its job ID are also deleted from image information storage section 79. Further, pushing the "TO UPPER PRIORITY" button after selecting an image-recording job in the currently displayed list of the image-recording jobs, the position of the selected image-recording job moves upward in the list and its priority order can be raised, while when pushing the "TO LOWER PRIORITY" button after selecting an image-recording job, the position of the selected image-recording job moves downward in the list and its priority order can be lowered.

Further, pushing the "PROPERTY SETTING" button after selecting an image-recording job in the currently displayed list of the image-recording jobs, the arithmetic calculation property screen 86, as shown in Fig. 13, is displayed. In the arithmetic calculation property screen 86, the contents of the arithmetic calculations established by using setting screen 35 of image editing section 31 and bridge section 34 in the image-information transmitting apparatus 3 are displayed, and further, it is possible to modify their values and conditions. Still further, in the column of the "RECORDING PROPERTY", the image-recording conditions established in the image-information transmitting apparatus 3 are displayed, and further, it is possible to modify them as well. Yet further, it is also possible to establish a manual or an automatic mode of the recording operations and a manual or an automatic mode of the automatic data-deleting operations.

In inputted job screen 85 as shown in Fig. 12, pushing the "START ARITHMETIC CALCULATION" button after selecting an image-recording job in the currently displayed list of the image-recording jobs, the selected image-recording job is entered into the step of arithmetic calculation processing. Pushing the "START ARITHMETIC CALCULATION" button after selecting the image-recording job, job controlling section 72 sends an executing command for arithmetic calculation processing to arithmetic calculating section 74. In response to that command, arithmetic calculating section 74 reads the image information correlated to its job ID from image information storage section 79 through image information controlling section 73. Then, arithmetic calculating section 74 applies the arithmetic calculation processing, such as color transformation processing, enlargement processing, error diffusion processing, etc., to the appropriate image information to convert them to the dot image data recordable for recording medium "A". Further, arithmetic calculating section 74 applies reversible compression processing, which employs the "run length method", to the dot image data, and then, the compressed dot-image data is correlated to the newly generated job ID as aforementioned, in order to store the data for every image-recording job into data storage section 80 through data controlling section 75.

Further, when simulation of the amount of ink to be consumed is selected as a data processing in bridge section 34 of image-information transmitting apparatus 3, arithmetic calculating section 74 calculates the expected amount of ink to be consumed from the number of ink dots, after completing the arithmetic calculation as already mentioned in the above. These simulation data are correlated to the secondary job ID created separately from the primary job ID for the data recordable for recording medium "A", in order to store them into data storage section 80 through data controlling section 75.

The process of the arithmetic calculation processing is not displayed on inputted job screen 85 shown in Fig. 12. Pushing the radio button of the "ARITHMETIC CALCULATION JOB" located at an upper position of inputted job screen 85, the screen is switched to the arithmetic calculation job screen 87 as shown in Fig. 14. The display input section 71 displays a list of arithmetic calculation processing statuses of the image-recording jobs in the arithmetic calculation job screen 87.

In the arithmetic calculation job screen 87, a list including the newly created job ID, the job name, the kind of cloth, the output image size, etc. is displayed, as well as the aforementioned inputted job screen 85 (refer to Fig. 12). Pushing the "START ARITHMETIC CALCULATION" button after an image-recording job is selected by using inputted job screen 85, the selected image-recording job is added on the lowest line of this list. When "ARITHMETIC CALCULATION ONLY" is designated in bridge section 34 of image-information transmitting apparatus 3, one line for a new job ID with respect to the data recordable for recording medium "A", etc. is added on the lowest line of the list of the arithmetic calculation job screen 87. When "SIMULATION OF THE CONSUMED AMOUNT OF INK ONLY" is designated, one line for a new job ID with respect to the simulation data, etc. is added. When "BOTH ARITHMETIC CALCULATION AND SIMULATION OF THE CONSUMED AMOUNT OF INK" is designated, two lines for a new job ID with respect to the data recordable for recording medium "A", etc., and another new job ID with respect to the simulation data, etc. are added.

With respect to a state of arithmetic calculation processing, display input section 71 enables at least any one of arithmetic calculating section 74 and data controlling section 75 to transmit information in regard to the present status of the arithmetic calculation processing for the image-recording job at constant time intervals. In response to the inquiry about the present status of the arithmetic calculation processing, arithmetic calculating section 74 and data controlling section 75 report and transmit the information in regard to the progress status of the arithmetic calculation processing, the estimated calculating time required, etc. to display input section 71. Accordingly, the data of "CALCULATION PROGRESS STATUS" and "DATA SIZE (Mbyte)" in the arithmetic calculation job screen 87 are automatically revised at the constant time intervals. In addition, synchronized with the abovementioned action, the displayed items in the column of the "STATUS", etc. are also automatically revised at the constant time intervals. Incidentally, in the "STATUS", the items of "CALCULATED", "IN CALCULATION" and "AWAITING CALCULATION", etc., will be indicated.

At the lower-left of arithmetic calculation job screen 87, the empty capacity and the using rate of the image information storage section 79 (for the "PRIMARY SPOOL") and the data storage section 80 (for the "SECONDARY SPOOL") are indicated, as well as inputted job screen 85.

At the lower-right of the arithmetic calculation job screen 87, various kinds of buttons are located, as well as inputted job screen 85. By pushing each of the "DELETE", the "TO UPPER PRIORITY" and the "TO LOWER PRIORITY" buttons among them, a single or a plurality of image-recording job(s) selected from the list can be deleted, or a priority order of an image-recording job selected from the list can be raised or lowered within the list of the image-recording jobs, as well as inputted job screen 85. Further, pushing the "TEMPORARY STOP" button after selecting an image-recording job currently under the arithmetic calculation processing, the arithmetic calculation processing for the selected image-recording job will be temporary stopped. Still further, pushing the "RESTART" button after selecting an image-recording job, for which the arithmetic calculation processing is temporary stopped, the arithmetic calculation processing will be restarted. Still further, pushing the "SUSPEND" button after selecting an image-recording job, the arithmetic calculation processing for which is temporary stopped, the arithmetic calculation processing will be suspended and the selected image-recording job will be deleted from the arithmetic calculation job screen 87. Yet further, pushing the "RECALCULATION" button after selecting an image-recording job, for which the arithmetic calculation processing is already finished, the arithmetic calculation processing for the selected image-recording job will be done again.

Pushing the "PROPERTY SETTING" button after selecting an image-recording job, for which the arithmetic calculation processing is already finished, from the list shown by the arithmetic calculation job screen 87, the recording property setting screen 88 as shown in Fig. 15 will be displayed. In the recording property setting screen 88, the processing contents of the image-recording operation established in image-information transmitting apparatus 3 or modified by using the arithmetic calculation property screen 86 mentioned previously (refer to Fig. 13) are displayed and can be modified again.

Further, it is also possible to establish various kinds of image-recording conditions by using the "OPTION" column located at the lower portion of the recording property setting screen 88. In the recording property setting screen 88, by checking off the "EMPLOY HEAD RECOVERY METHOD", it is possible to establish a mode that, when one of the aforementioned 2 sets, each of which includes 8 heads, equipped in recording apparatus 6, cannot be used due to the nozzle clogging defect of a single or a plurality of nozzle(s) of the head(s) included, only the other set of heads is employed for the image-recording operation. Still further, as aforementioned, it is possible for recording apparatus 6 to detect the end of the cloth and the stitched seams of the cloth by means of detecting section 62. In the recording property setting screen 88, it is also possible to input a command for the processing method into recording apparatus 6 by selecting one of three options including "FEED CLOTH FOR A PREDETERMINED LENGTH" (namely, constant length L shown in Fig. 9), "TEMPORARY STOP" and "NOT DETECT". Still further, it is also possible to select options whether or not head cleaning should be conducted and whether or not wrinkles of the cloth should be detected, when the detecting operation of the end portion and the stitched seams of the cloth is completed.

Pushing the "CREATE RECORDING JOB" button after selecting an image-recording job in regard to the data recordable for recording medium "A" from the list of the image-recording jobs in the arithmetic calculation job screen 87 shown in Fig. 14, the selected image-recording job enters in a record-processing possible state, namely, a standby state, so to speak. The operation for commencing the image-recording operation is not allowed in this arithmetic calculation job screen 87. Instead, pushing the radio button labeled "RECORDING JOB" located at an upper area of the arithmetic calculation job screen 87, the screen will be switched to recording job screen 89 as shown in Fig. 16. The display input section 71 displays a list of the record-processing status of the image-recording operations in recording job screen 89. Even if the "CREATE RECORDING JOB" button is pushed after an image-recording job in regard to the simulation data, being the result of the simulation of the consumed amount of ink, is selected, such image-recording job is not displayed on recording job screen 89.

By pushing the "START RECORDING" button after selecting an image-recording job in recording job screen 89, the image-recording operation commences.

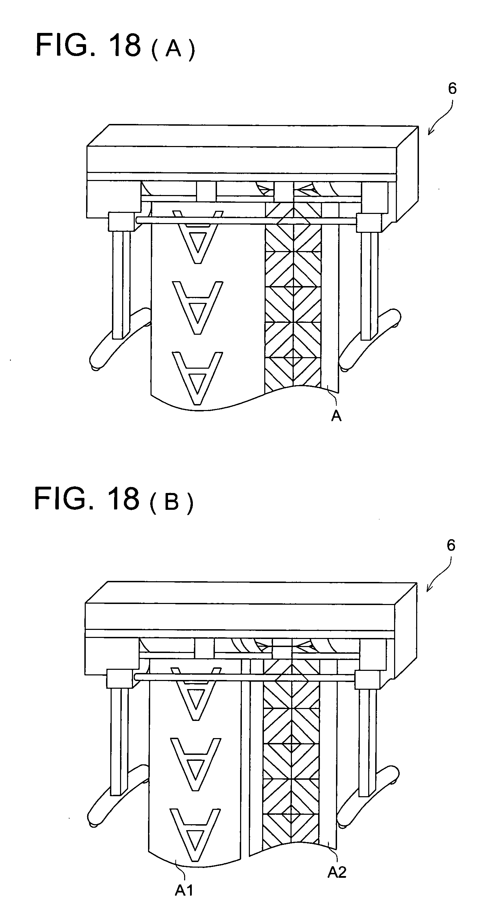

Pushing the "CREATE RECORDING JOB" button after selecting a plurality of image-recording jobs in regard to the data sets recordable for recording medium "A" from the list of the image-recording jobs in the arithmetic calculation job screen 87 shown in Fig. 14, the output allotment setting screen 90 as shown in Fig. 17 will be displayed. As shown in Fig. 18(A), the term of the "output allotment" is to repeatedly records a plurality of images having the same pattern or different patterns in a horizontal direction relative to recording medium "A" at a time by employing a single set of recording apparatus 6, and allows to prevent deterioration of the effective scanning rate in the main-scanning direction when the image-recording operation is applied to the cloth having a narrow width. As shown in Fig. 18(B), the abovementioned definition is also applied to such a case that a plurality of images having the same pattern or different patterns are repeatedly and respectively recorded onto recording mediums "A1" and "A2" by employing a single set of recording apparatus 6. In the output allotment setting screen 90 (refer to Fig. 17), a plurality of job names of the image-recording jobs selected from the list of arithmetic calculation job screen 87 (refer to Fig. 14) are indicated in the upper area windows from allotted job 1 to allotted job 4. The recording apparatus 6 conducts the image-recording operations for the allotted jobs in an order from the lowest number to the largest number, so as to arrange them in the horizontal direction. Since each of the job names can be arbitrarily designated by pushing the spin button either upward or downward, it is possible to change the order of the allotted jobs by replacing the job names in the windows relative to each other. Further, in the output allotment setting screen 90, it is possible to input a recording job name for handling the plurality of allotted image-recording jobs as a combined single image-recording job. Still further, it is possible to establish the output length. Yet further, it is also possible to establish either a number of repetitions and/or a repeat length of each image-recording job in the horizontal direction, and to establish an allotment interval between the image-recording jobs.

When a single image-recording job is selected from arithmetic calculation job screen 87, the job ID, the job name, etc. of the single image-recording job are added and displayed as the lowest line in the list of recording job screen 89 shown in Fig. 16. When a plurality of image-recording jobs are selected from the arithmetic calculation job screen 87, the recording job name of the image-recording job newly established and created by using the output allotment setting screen 90, the job ID created by job controlling section 72, etc. are added and displayed as the lowest line in the list of recording job screen 89. The items to be displayed are the same as those displayed in the aforementioned case of inputted job screen 85 and arithmetic calculation job screen 87. The empty capacity and the using rate of the image information storage section 79 (being the primary spool) and data storage section 80 (being the secondary spool) are displayed at the lower left in recording job screen 89, as well. In the lower-right area of recording job screen 89, various kinds of buttons are disposed, as well as inputted job screen 85. By pushing each of the "DELETE", the "TO UPPER PRIORITY" and the "TO LOWER PRIORITY" buttons among them, a single or a plurality of image-recording job(s) selected from the list can be deleted, or the priority order of an image-recording job selected from the list can be raised or lowered within the list of the image-recording jobs, as well as on inputted job screen 85.

As previously mentioned in the above, by pushing the "RECORDING START" button after selecting an image-recording job in recording job screen 89, the image-recording operation is commenced. Pushing the "RECORDING START" button, display input section 71 sends a command to conduct the output processing for the selected image-recording job to the job controlling section 72. In response to the command, the job controlling section 72 creates an output list of the data to be employed for the selected image-recording job, and then, transmits the created output list with instructions of the output processing to output processing section 76. In response to the instructions, output processing section 76 reads either a single or plural data set(s) based on the output list, and arranges the read data set(s) within the memory to output the arranged data set(s) to recording apparatus 6 through printer port driver 81 and USB driver 82.

Further, display input section 71 makes at least one of data controlling section 75 and output processing section 76 to transmit information in regard to the recording state of the image-recording job through job controlling section 72 at constant time intervals. In response to the inquiry sent from display input section 71, data controlling section 75 reports information in regard to the data outputting state of data storage section 80. The output processing section 76 reports information in regard to the estimated recording time, the recording progress status, etc. with respect to the output processing state of the data to display input section 71. Accordingly, synchronized with the abovementioned actions, the items of the "STATUS", the "RECORDING PROGRESS STATUS", etc. in recording job screen 89 of display input section 71 are automatically revised at the constant time intervals. Incidentally, the terms of the "WAIT RECORDING", the "WAIT PRINTER", the "IN RECORDING", the "RECORDING COMPLETED", etc. will be displayed in the "STATUS". The status of the "WAIT RECORDING" is defined as the status of the image-recording job during a period from the time point when the "CREATE RECORDING JOB" button is pushed in arithmetic calculation job screen 87 to the time point when the "START RECORDING" button is pushed in recording job screen 89.

Further, pushing the "TEMPORARY STOP" button after selecting an image-recording job currently in recording operation, the recording operation for the selected image-recording job will be temporary stopped. Still further, pushing the "RESTART" button after selecting an image-recording job, the recording operation for which is temporary stopped, the recording operation will be restarted. Still further, pushing the "SUSPEND" button after selecting an image-recording job, for which the recording operation is temporary stopped, the recording operation will be suspended, and the state of the image-recording job returns to the status of the "WAIT RECORDING". The function of the "TEMPORARY STOP" button allows the operator to stop the main-scanning actions of the head equipped in the ink-jet printer, serving as image-recording apparatus 5, for instance, when a wrinkle is generated or a foreign material is recognized on the cloth, serving as recording medium "A", during the image-recording operation, in order to correct the wrinkle of the cloth or to remove the foreign material. Further, when the operator finds abnormalities of the ink particles emitted from the nozzles of the head during the image-recording operation, it is possible for the operator to temporary stop the image-recording operation by pushing the "TEMPORARY STOP" button, to conduct a cleaning operation for the head or the like.

By conducting special operations after selecting an image-recording job from each of the aforementioned lists displayed in inputted job screen 85, arithmetic calculation job screen 87 and recording job screen 89, it is possible for the operator to confirm the job information such as the property, etc. of the image-recording job concerned. The system is so constituted that a screen on which the job information are described will be displayed by double-clicking the letters of the image-recording job concerned among image-recording jobs displayed in the list. For instance, double-clicking the image-recording job concerned among image-recording jobs displayed in the list of recording job screen 89, property confirmation screen 91 that indicates the property status of the image-recording job is displayed, as shown in Fig. 19. In the property confirmation screen 91, other than the job ID, the job name, etc., it is possible to confirm the status of the arithmetic calculation properties and the recording properties. Further, pushing the radio button of "EXPECTED AMOUNT OF INK CONSUMED", the expected amount of consumed ink confirmation screen 92 (refer to Fig. 20), by which the expected amount of consumed ink can be confirmed, will be displayed. Still further, pushing the "PREVIEW" button, pre-viewing screen 93 will be displayed (refer to Fig. 21), by which an image to be recorded by the image-recording job concerned can be confirmed.

When the image-information transmitting apparatus 3 transmits the image information and the layout information, the image-information transmitting apparatus 3 converts the image corresponding to the image information to be transmitted to a reduced size RGB image, which is transmitted through network 2. This reduced size RGB image is displayed on pre-viewing screen 93 as the pre-viewing image. As mentioned in the above, by creating the pre-viewing image in the image-information transmitting apparatus 3, it becomes possible to utilize the RGB image and its reduced size RGB image employed for the image editing operation in image editing section 31, resulting in improved efficiency of the system as a whole. It is also possible, however, that the system is so constituted that image-processing apparatus 7 conducts the reduction processing and the conversion processing to the RGB image when receiving the image information.

The aforementioned job information, displayed in inputted job screen 85 and the arithmetic calculation job screen 87, can be also displayed in property confirmation screen 91, the expected amount of consumed ink confirmation screen 92 and pre-viewing screen 93. Specifically, it is possible to confirm the output allotment information in recording job screen 89. In other words, the "output allotment information" button is indicated in the radio button area of property confirmation screen 91, the expected amount of consumed ink confirmation screen 92 or pre-viewing screen 93. Pushing the "output allotment information" button, the output allotment information confirming screen 94 will be displayed as shown in Fig. 22. In the output allotment information confirming screen 94, the job name, the job ID, etc. of the image-recording job created as the result of the output allotment processing are indicated in the upper area of the screen, while the job names, the job IDs, etc. of the image-recording jobs employed for the output allotment processing are indicated in order in the lower area of the screen. Incidentally, in case that an image-recording job, excluded from the output allotment in recording job screen 89, is selected, the "output allotment information" button is not indicated in the radio button area of property confirmation screen 91, etc. of the image-recording job excluded.

When a point to be corrected in regard to the arithmetic calculation property, the recording property, the output allotment, etc. is found in the aforementioned confirming screen, it is possible to change the settings by pushing the "SET PROPERTY" button in inputted job screen 85 or arithmetic calculation job screen 87 so as to call up the arithmetic calculation property screen 86 or the recording property setting screen 88, or by selecting a plurality of image-recording jobs in the arithmetic calculation job screen 87 to call up the output allotment setting screen 90.

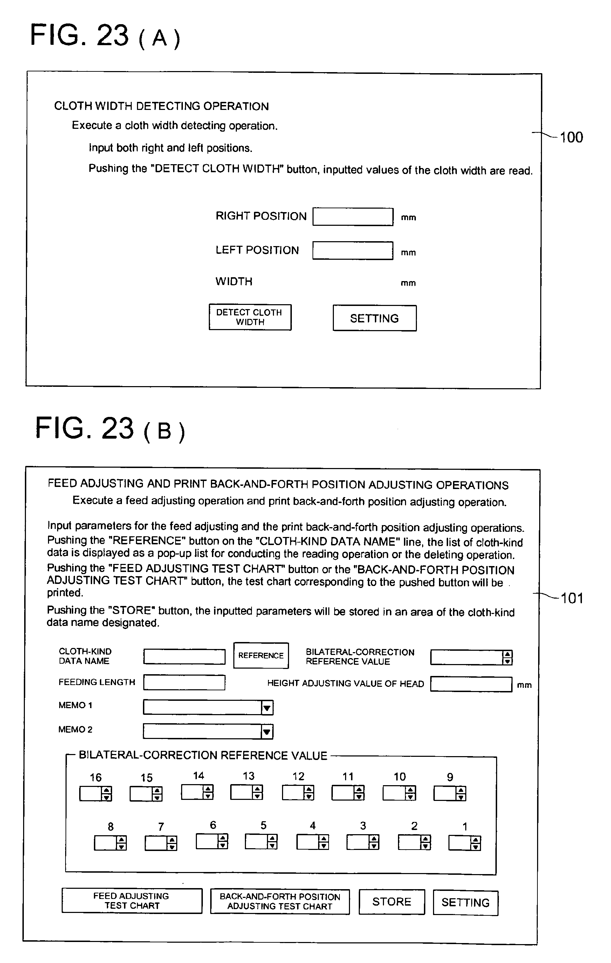

It is possible to conduct a setting operation of the cloth for establishing various kinds of settings with respect to the cloth, serving as recording medium "A" on which recording apparatus 6 records the image. Pushing a tag (not shown in the drawings) for switching the screens, such as printer screen 84, inputted job screen 85, etc., a screen used for the setting operation of the cloth will be displayed. In the setting operation of the cloth, displayed is cloth width detecting screen 100 in which values can be inputted to set the right edge position and the left edge position of the cloth width, as shown in Fig. 23(A). Further, pushing the "DETECT CLOTH WIDTH" button, recording apparatus 6 automatically detects the right edge position and the left edge position of the cloth, the values of which are then displayed, and can be modified.

It is also possible to conduct a head adjustment. As shown in Fig. 23(B), it is possible to input a data name of the cloth-kind, a feeding amount, a bilateral-correction reference value and a height adjusting value of the head into a feed adjusting and print back-and-forth position adjusting screen 101. Hereinafter, when recording apparatus 6 is an ink-jet printer employing the serial heads method, the term of "bilateral correction" is defined as a correcting operation so that the emitting position of ink particles emitted from the nozzle on the return path is made to coincide with that in forward path, synchronized with the back-and-forth moving action of the carriage. When inputting the bilateral-correction reference value, its value is indicated in one of windows located in the lower area of the screen, for inputting bilateral-correction reference values for each of the 16 heads respectively. It is then also possible to further input the bilateral-correction reference value for every one of the 16 heads. Further, a test chart can be printed by pushing the "FEED ADJUSTING TEST CHART" button and "BACK-AND-FORTH POSITION ADJUSTING TEST CHART" button, and then, based on the result of the printed test, it is possible to revise the feeding amount and the bilateral-correction reference value of each head.

Still further, it is possible for the operator to write memos in the columns of the "MEMO 1" and "MEMO 2". The contents of the memos written in the columns of the "MEMO 1" and "MEMO 2" are indicated in the "MEMO 1" and "MEMO 2" of printer screen 84 aforementioned. It is possible to configure the system so that, when registering the kind of cloth, features of the cloth are also registered as part of the input data set to be displayed in the "MEMO 1" and "MEMO 2". Then, by registering the same kind of clothes as the different kinds of clothes in the case that the pretreatments and the post-treatments for the same kind of clothes are different from each other, etc., it is possible to select the kind of the cloth having the pre-treatment and post-treatment conditions same as those of the image-recording job by referring the "MEMO 1" and "MEMO 2". Then, by selecting the kind of cloth, the feeding amount, the bilateral-correction reference value, the height adjusting value of the head, etc., which were employed in a previous image-recording operation, are also displayed as they were. Accordingly, it becomes possible to reduce the difference due to fluctuations of conditions, and to store the precise conditions for accurately performing the image-recording operation. Still further, since this contents are displayed not only in display input section 71 of image-processing apparatus 7, but also in information terminal device 4, it becomes possible to effectively utilize them for the purpose of more precise production control.

Although the setting operation can be achieved by using the cloth width detecting screen 100 and the feed adjusting and print back-and-forth position adjusting screen 101 sequentially displayed in the wizard procedure form, in the setting operation of the cloth, embodied in the present invention, it is also possible to conduct the setting operation by using them independently.

The maintenance of recording apparatus 6 can be conducted in three levels.

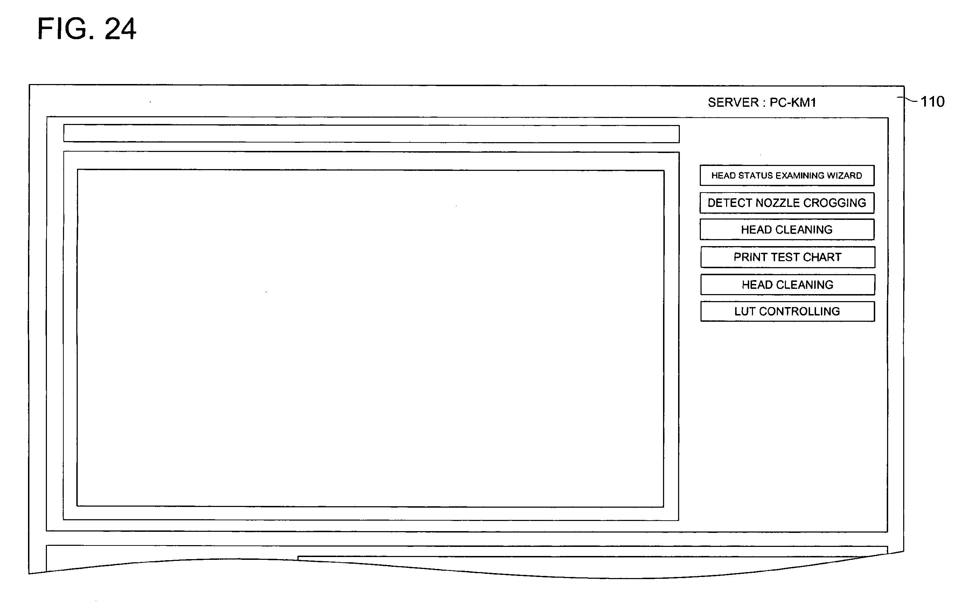

First-level maintenance is a normal maintenance that is conducted by the operator or the like of recording apparatus 6 and includes operations of detecting the nozzle clogging, conducting head cleaning, printing test patterns, etc. Pushing a tag (not shown in the drawings) for switching the screens, such as printer screen 84, inputted job screen 85, etc., normal maintenance screen 110 shown in Fig. 24 will be displayed. Then, by pushing the "HEAD STATUS EXAMINING WIZARD" button, it is possible to easily conduct consecutive operations of detecting nozzle clogging, conducting head cleaning and printing test patterns in the wizard procedure form.

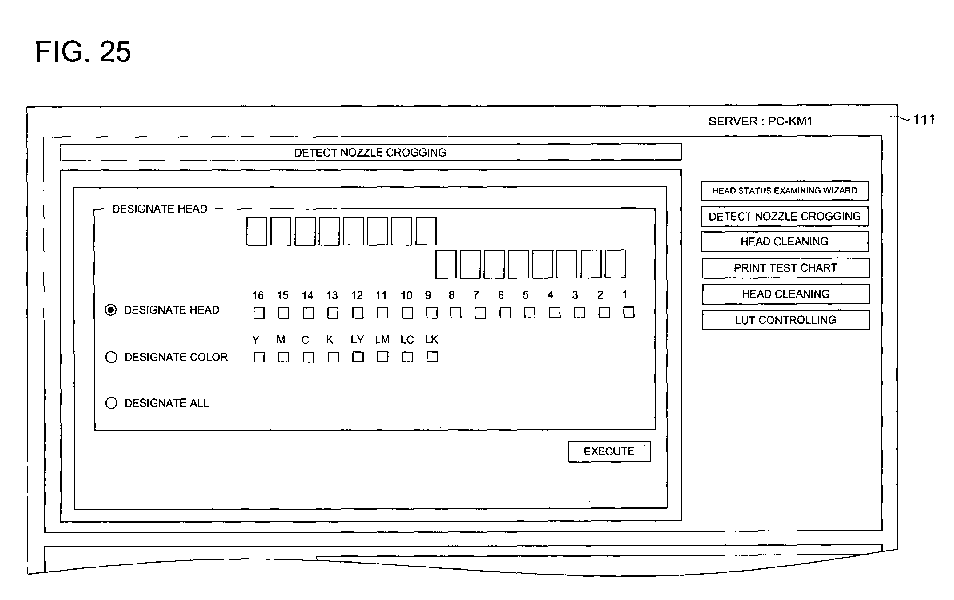

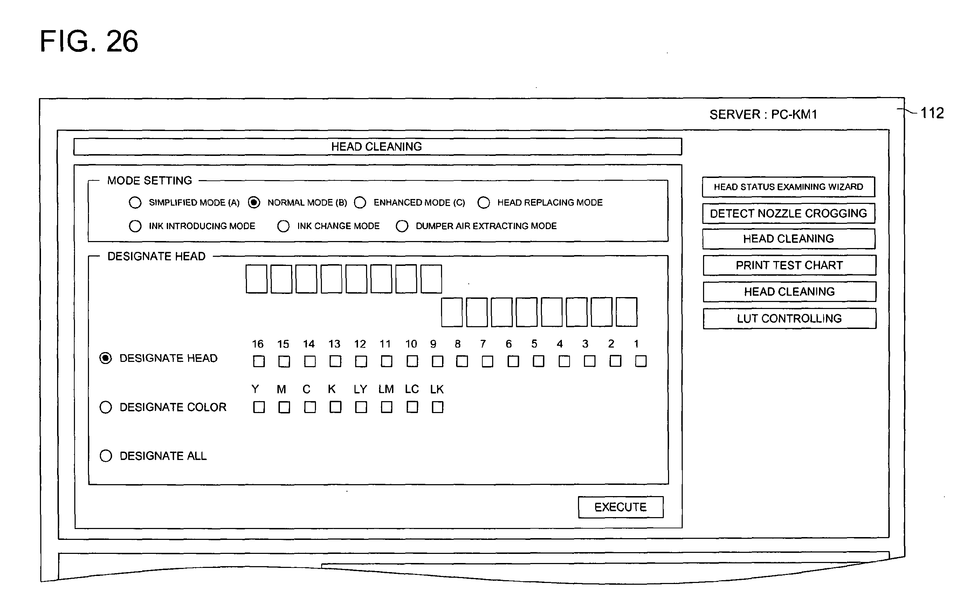

Each of the operations of detecting nozzle clogging, etc. can be also conducted independently. Pushing the "DETECT NOZZLE CLOGGING" button, nozzle clogging detecting screen 111 will be displayed as shown in Fig 25. In nozzle clogging detecting screen 111, the operation of detecting the nozzle clogging can be conducted by separately designating a specific head to be detected or by designating a head by color. Further, it is also possible to conduct the operation by designating all of the heads. Pushing the "EXECUTE" button, the operation of detecting the nozzle clogging is executed, and then, the results of the operation are displayed. Pushing the "HEAD CLEANING" button in normal maintenance screen 110, head cleaning screen 112 will be displayed as shown in Fig 26. In head cleaning screen 112, the operation of cleaning the head can be conducted by separately designating a head to be cleaned or by designating a head by color, as well. Further, it is also possible to conduct the operation by designating all of the heads. Still further, each of the various kinds of maintenance operations can be conducted by selecting each of various kinds of modes in the mode setting operation. Pushing the "EXECUTE" button, the operation of cleaning the head is executed, and then, the results of the operation are displayed. Other than the maintenance operations mentioned in the above, operations of printing test pattern, cleaning the belt and controlling the LUTs can be conducted by using normal maintenance screen 110.

Second-level maintenance is a specialized maintenance that is conducted by the system manager or the like who is educated with the maintenance techniques. He could conduct such operations of replacing the head, setting the automatic cleaning execution, cleaning the suction unit, extracting the air from the damper, storing each of parameters of recording apparatus 6 into the F-ROM so as to fetch them for image-processing apparatus 7, setting the name of the computer, setting TCP/IP address, setting the head voltage, etc., though such the operations are not shown in the drawings. As for the maintenance operation of replacing the head, he would conduct such operations of designating the head to be replaced, setting the head driving voltage, sucking the replaced head, detecting the nozzle clogging of the replaced head, cleaning the head in which the nozzle clogging is detected, printing various kinds of check charts for testing, adjusting the inclination and the back-and-forth position of the head, setting gap parameters in both the main-scanning direction and the sub-scanning direction, etc., on the wizard procedure format. As for the maintenance operation of setting the automatic cleaning execution, it is possible to set a necessity or an unnecessity of the head cleaning operation to be conducted at the time when turning ON the power source, commencing the image-recording operation and in mid-course of the image-recording operation, and to set one of head cleaning modes (namely, selected from a simple mode, a normal mode and a strong mode) for each of three head cleaning steps, which are conducted within one cleaning operation. Incidentally, when the head cleaning operation is not completed sufficiently within the three head cleaning steps, the error comment will be displayed. As for the maintenance operation of extracting the air from the damper, the operation can be conducted by separately designating a head or by designating a head by colors, as well as the operation of detecting the nozzle clogging, shown in Fig. 25.

Third-level maintenance is a highly specialized maintenance that is conducted by the system manager or the like who is highly educated with the maintenance techniques. He could conduct such operations of rewriting the firmware, setting the automatic cleaning execution, setting the default items at the factory shipment time, storing the default items of the factory shipment, setting the initial values, checking the IO, inputting the serial numbers of the winder, the unwinder, the dryer and the image-processing apparatus, designating the ink set, setting arbitral data, etc., though such the operations are not shown in the drawings. As for the maintenance operation of designating the ink set, it is possible to designate a specific ink set to be used by selecting one of the YMCK set, the light YMCK set and the special color set, being a combination of the YMCK set and a specific color ink, such as orange, violet, etc. Changing this designation, all of the ink set designations (Y, M, C, K, LY, LM, LC, LK, etc.), displayed in, for instance, printer screen 84 (refer to Fig. 11), nozzle clogging detecting screen 111 (refer to Fig. 25), head cleaning screen 112 (refer to Fig. 26), etc., will be changed. Further, as for the maintenance operation of setting arbitral data, it is possible to modify the various kinds of parameters used in recording apparatus 6.

Next, the functions of the image-processing apparatus, the image-recording apparatus and the image-recording system will be detailed in the following.

When a client inserts the information-recording medium, such as an MO Disc (Magneto Optics Disc) or the like, in which the image information to be employed for the image-recording job are stored, into inputting section 30 of image-information transmitting apparatus 3 (refer to Fig. 3), inputting section 30 reads the image information so as to transmit the read data to image editing section 31. The client performs editing operations of creating or pasting the repeated images, conducting the automatic arrangement, repeating the images, etc., while viewing the image based on the abovementioned image information and displayed on display 32 being a monitor, etc. The image information edited in the editing operation mentioned in the above and the layout information for one image block, including the disposing information of the created image, are stored into storage section 33 as they are or after applying the reversible compression processing, according to the selecting action conducted by the client.

The client calls up bridge section 34 of image-information transmitting apparatus 3 to establish the image-recording conditions by using the setting screen 35 (refer to Fig. 8). Since image-processing apparatuses 7 of image-recording apparatuses 5 coupled to network 2 are displayed on setting screen 35, the client selects a specific image-processing apparatus 7, suitable for sending the image-recording job, among them. Further, since it is possible to input a job comment into image-processing apparatus 7 through setting screen 35, the client can notify an attention notice, a content of designation, a deadline of the image-recording operation, etc. with respect to the cloth, serving as recording medium "A", of the operator of image-recording apparatus 5. Still further, it is possible to establish the image-recording conditions in detail by using the options for the image-recording condition setting.

The image information and the layout information are transmitted to the image-processing apparatus 7 (refer to Fig. 10) of image-recording apparatus 5 selected in the above through network 2. In the image-processing apparatus 7, the image information and the layout information are sent to image information controlling section 73 through receive controlling section 70 and job controlling section 72 to store them into image information storage section 79 for every image-recording job. At that time, image information controlling section 73 attaches a unique job ID being different from the aforementioned job name to the image-recording job, so as to control the image information and the layout information by correlating them with the job ID attached. The job ID, the image-recording conditions, etc. are sent to display input section 71 to register them, and such the information are displayed on inputted job screen 85 (refer to Fig. 12) of display input section 71. The operator of image-recording apparatus 5 can grasp the receiving status of the image-recording jobs registered by using inputted job screen 85.

By pushing either the "TO UPPER PRIORITY" button or the "TO LOWER PRIORITY" button after selecting a specific image-recording job from the list of inputted job screen 85, the operator can raise or lower the priority order of the image-recording job concerned within the list of the image-recording jobs to modify the priority order of them. Further, in response to a deleting request sent from the client, the operator can delete a concerned image-recording job selected from the list of the image-recording jobs by pushing the "DELETE" button, so as to delete the image information and the layout information of the image-recording job concerned from image information storage section 79. Still further, even when the empty capacity of image information storage section 79 (the primary spool), indicated at the lower-left position in inputted job screen 85, is reduced, the operator can delete a unnecessary image-recording job by pushing the "DELETE" button after selecting the image-recording job concerned from the list of the image-recording jobs while referring to the data size of the image-recording job concerned. Accordingly, it becomes possible to effectively increase the empty capacity of image information storage section 79.

By pushing the "PROPERTY SETTING" button after selecting the image-recording job concerned from the list of inputted job screen 85, the operator can make the displaying device to display arithmetic calculation property screen 86 (refer to Fig. 13). Further, the operator can change or modify the contents of arithmetic calculation processing, established by the client in image editing section 31 or setting screen 35 of bridge section 34 of image-information transmitting apparatus 3, as needed by using the arithmetic calculation property screen 86. Still further, it is also possible to change the image-recording conditions established in the image-information transmitting apparatus 3, as well.

Further, by double-clicking on the image-recording job selected from the list of image-recording jobs, property confirmation screen 91 (refer to Fig. 19), expected amount of consumed ink confirmation screen 92 (refer to Fig. 20) and pre-viewing screen 93 (refer to Fig. 21) are displayed. The operator can confirm the job information by referring to such the screens indicated in the above. At this time, if the operator finds a point to be corrected, for instance, in the arithmetic calculation property or the recording property of the property confirmation screens 91, the operator can change the setting items in the arithmetic calculation property screen 86 displayed by pushing the "PROPERTY SETTING" button of inputted job screen 85. Incidentally, the radio button of the output allotment information is not displayed in property confirmation screen 91, etc. called from inputted job screen 85.

Each of the image-recording jobs listed in the inputted job screen 85 of display input section 71 can be shifted to the phase of arithmetic calculation processing only when the operator pushes the "START ARITHMETIC CALCULATION" button after selecting the image-recording job concerned.

Accordingly, when the instruction of the arithmetic calculation processing is inputted into display input section 71, the image information, correlated to the job ID of the image-recording job selected, are read into arithmetic calculating section 74 from the image information storage section 79. Then, arithmetic calculating section 74 applies the arithmetic calculation processing, such as the color conversion processing, the enlarging processing, the error diffusion processing, etc., to the image information, so as to generate the dot image data to which the reversible compression processing is further applied. Then, the compressed dot image data are correlated to the newly generated job ID to store them in data storage section 80. Further, in a case that the client requests to execute the simulation of the consumed amount of ink, such the simulation is conducted on the basis of the data acquired by the arithmetic calculation processing. Then, the secondary job ID, which is deferent from the primary job ID created with respect to the dot image data mentioned in the above, is created, in order to store the simulation data, being a result of the simulation and correlated to the secondary job ID, into data storage section 80 through data controlling section 75. The state of the arithmetic calculation processing is not displayed on the inputted job screen 85, but the operator can grasp the state of the arithmetic calculation processing on the arithmetic calculation job screen 87 (refer to Fig. 14).

As well as the operations in inputted job screen 85, by pushing either the "TO UPPER PRIORITY" button or the "TO LOWER PRIORITY" button after selecting a specific image-recording job from the list of arithmetic calculation job screen 87, the operator can raise or lower the priority order of the image-recording job concerned within the list of the image-recording jobs to modify the priority order of them. Further, when the deleting request is received from the client, or when the empty capacity of data storage section 80 (the secondary spool), indicated at the lower-left position in arithmetic calculation job screen 87, is reduced, the operator can delete an image-recording job designated by the client or unnecessary image-recording jobs selected from the list of the image-recording jobs by pushing the "DELETE" button, so as to delete the image information and the layout information of the image-recording job(s) concerned from data storage section 80. Accordingly, it becomes possible to effectively increase the empty capacity of data storage section 80. Still further, the operator can delete the image-recording job from the list of the image-recording jobs or resume the arithmetic calculation processing by temporary stopping, restarting or suspending the arithmetic calculation processing of the image-recording job.

Further, when the operator pushes the "PROPERTY SETTING" button after selecting the image-recording job concerned from the list of arithmetic calculation job screen 87, recording property setting screen 88 (refer to Fig. 15) is displayed on display input section 71. Further, the operator can change or modify the contents of arithmetic calculation processing, established by the client in image editing section 31 or setting screen 35 of bridge section 34 of image-information transmitting apparatus 3 and automatically displayed in the column of the "RECORDING PROPERTY" of the recording property setting screen 88, as needed. Still further, it is also possible for the operator to change or modify various kinds of image-recording conditions in detail by using the "option" column located at the lower position of the abovementioned column.

Still further, as well as the case of inputted job screen 85, double-clicking the image-recording job selected from the list of the image-recording jobs, property confirmation screen 91 (refer to Fig. 19), expected amount of consumed ink confirmation screen 92 (refer to Fig. 20) and pre-viewing screen 93 (refer to Fig. 21) are displayed. The operator can confirm the job information by referring to such the screens indicated in the above. At that time, if the operator finds a point to be corrected, for instance, in the recording property of the property confirmation screens 91, the operator changes the setting items in recording property setting screen 88 displayed by pushing the "PROPERTY SETTING" button of recording job screen 89. Further, when the operator corrects the items with respect to the arithmetic calculation property displayed on property confirmation screen 91, it is necessary to restart the arithmetic calculation of the image-recording job concerned. For this purpose, the operator can restart the arithmetic calculation by conducting the steps of: once pushing the "PROPERTY SETTING" button in inputted job screen 85 to display arithmetic calculation property screen 86; changing the settings of the arithmetic calculation, displayed in arithmetic calculation property screen 86 and then pushing the "RECALCULATION" button. Incidentally, the radio button for the output allotment information is not displayed in property confirmation screen 91, etc. called from arithmetic calculation job screen 87.

Each of the image-recording jobs listed in the arithmetic calculation job screen 87 of the display input section 71 and recordable for recording medium "A" can be shifted to the phase of image-recording processing, namely, a state of waiting the recording operation, only when the operator pushes the "CREATE RECORDING JOB" button after selecting the image-recording job concerned. At this time, although the operator can select a single image-recording job from the list to shift it to the image-recording processing, the operator can also select a plurality of image-recording jobs from the list to apply the output allotment to the image-recording operation of them. Pushing the "CREATE RECORDING JOB" button after selecting the plurality of image-recording jobs concerned, output allotment setting screen 90 (refer to Fig. 17) will be displayed. Then, the operator establishes a new job name for handling the plurality of image-recording jobs as a single image-recording job, and also establishes the image-recording conditions for the output allotment.

The operator switches the current screen to recording job screen 89 (refer to Fig. 16) so as to conduct the image-recording operation. By pushing the "START RECORDING" button after selecting an image-recording job from the list in recording job screen 89, the operator makes the image-recording operation to commence. When the instruction of the image-recording operation is inputted into display input section 71 as mentioned in the above, display input section 71 sends an instruction of conducting the output processing for the selected image-recording job to job controlling section 72. In response to the instruction, job controlling section 72 creates an output list of data sets to be employed for the image-recording job, and then, sends the output instruction with the output list to output processing section 76. In response to the output instruction, output processing section 76 reads a single or a plurality of data set(s), based on the output list, from data storage section 80 through data controlling section 75, so as to successively arrange the data set(s) on the memory on the basis of the disposing information. Then, based on the image-recording conditions, the output processing section 76 repeats the output operation of the arranged data set(s) a number of times established in the horizontal direction and the vertical direction so as to transmit them to recording apparatus 6 through printer port driver 81 and USB driver 82. In recording apparatus 6, the images based on the transmitted data set(s) are recorded onto recording medium "A".

The operator can grasp the state of the image-recording operation by viewing the recording job screen 89.

As well as the operations in inputted job screen 85 and the arithmetic calculation job screen 87, by pushing either the "TO UPPER PRIORITY" button or the "TO LOWER PRIORITY" button after selecting a specific image-recording job from the list of arithmetic calculation job screen 87, the operator can raise or lower the priority order of the image-recording job concerned within the list of the image-recording jobs to modify the priority order of them. Further, when the deleting request is received from the client, or when the empty capacity of data storage section 80 (the secondary spool), indicated at the lower-left position in inputted job screen 85, is reduced, the operator can delete an image-recording job designated by the client or unnecessary image-recording jobs selected from the list of the image-recording jobs by pushing the "DELETE" button, so as to delete the image information and the layout information of the image-recording job(s) concerned from data storage section 80. Still further, the operator can make the image-recording job to return to the state of waiting the recording operation by temporary stopping, restarting or suspending the recording operation of the image-recording job.

Further, as well as the cases of inputted job screen 85 and the arithmetic calculation job screen 87, double-clicking the image-recording job selected from the list of the image-recording jobs, property confirmation screen 91 (refer to Fig. 19), expected amount of consumed ink confirmation screen 92 (refer to Fig. 20) and pre-viewing screen 93 (refer to Fig. 21) are displayed. The operator can confirm the job information by referring to such the screens indicated in the above. Still further, when the output allotment is applied, it is possible for the operator to confirm the state of the output allotment by displaying the output allotment information confirming screen 94 (refer to Fig. 22).

On the other hand, by observing printer screen 84 (refer to Fig. 11), the operator can monitor not only a number of the stitched seams of recording medium "A" detected by detecting section 62 of recording apparatus 6 and the length of the cloth on which the images are recorded from the stitched seam, but also the state of the unwinder and the ink status. Further, even if printer screen 84 is switched to inputted job screen 85, etc., the column, which is located at the lower area of printer screen 84 and on which the state of recording apparatus 6 and the information of the image-recording job currently in a mid-course of the recording operation are displayed, is always displayed without being switched. In addition, the job comment, inputted by the client in setting screen 35 of bridge section 34 in image-information transmitting apparatus 3, is displayed in the lower area of the column. Therefore, it becomes possible for the operator to smoothly conduct the image-recording job by confirming the contents of the column.

When the ink is empty in the ink-pack, the empty ink-pack is displayed with a red color. Further, when a functional error of recording apparatus 6, the unwinder, the ink status, etc. occurs, the error message is displayed with a red color at the corresponding position in printer screen 84. In addition, the place and the content of the error are also displayed with a red color in the lower column. Accordingly, it becomes possible for the operator to accurately cope with the error in a speedy manner.

Further, it is possible for the operator to conduct the width setting of the cloth, the head adjustment, the head cleaning, the setting of the automatic cleaning execution, the head replacement, etc. through the aforementioned cloth setting and various kinds of the maintenance operations.

As in the same manner that information terminal device 4 conducts the communicating operation based on the TCP/IP protocol through receive controlling section 70 of image-processing apparatus 7 and network 2, display input section 71 conducts the communicating operation based on the same protocol as that of receive controlling section 70. Accordingly, job controlling section 72 can respond to the inquiring signal sent from information terminal device 4 with the same protocol as that for responding to the request from display input section 71.

The production status in recording apparatus 6 can be also monitored by using the information terminal device 4 (refer to Fig. 1) coupled to network 2 and located at the client site. When information terminal device 4 transmits the inquiring signal, the information in regard to the residual amount of ink, the residual length of the cloth, etc. will be sent back to the information terminal device 4 through network 2 in order to display them on its displaying device.

The similar screens as those displayed in display input section 71, such as printer screen 84 (refer to Fig. 11), inputted job screen 85 (refer to Fig. 12), arithmetic calculation job screen 87 (refer to Fig. 14), recording job screen 89 (refer to Fig. 16), recording property setting screen 88 (refer to Fig. 15), etc. are displayed on the displaying device of information terminal device 4. Accordingly, the client can confirm the kind of cloth serving as recording medium "A" and established by recording apparatus 6, the height adjusting value of the head, the total length of the recorded cloth completed from the operation commencement of recording apparatus 6, the number of stitched seams of the cloth, the length of the cloth on which the images are recorded from the stitched seam, the contacting/released state of the belt cleaner relative to the conveying belt of recording apparatus 6, etc. by observing the similar screen as printer screen 84. Further, it is possible to confirm the status of the ink-pack of recording apparatus 6 by using this screen. In addition, it is also possible to confirm the error contents displayed with a red color.

The client can confirm the processing status, the starting time of the recording operation, the elapsed time of the recording operation, etc. of the image-recording job by using each of the screens similar to inputted job screen 85, arithmetic calculation job screen 87 and recording job screen 89, which are displayed on the displaying device of information terminal device 4. Further, the client can confirm the settings of the operator's manner of how to cope with the situation when the stitched seam is detected in image-recording apparatus 5, by using the screen similar to the recording property setting screen 88.

As mentioned in the foregoing, according to image-processing apparatus 7 and image-recording apparatus 5, it is possible to control the processing states of the image information and the layout information, which are transmitted from image-information transmitting apparatus 3 through network 2 and employed for image-recording job, separately in the receiving step, the arithmetic calculation step and the image-recording step by using inputted job screen 85, arithmetic calculation job screen 87 and recording job screen 89 displayed in display input section 71, respectively. As a result, it becomes possible for the operator of image-recording apparatus 5 to accurately grasp the processing state in each of the steps.

Specifically, there are displayed on each of the job screens not only the processing statuses of the image-recording job (such as, "ON INPUTTING", "INPUTTED", "ON CALCULATING", "CALCULATED", "WAIT RECORDING", "ON RECORDING", "RECORDED", etc.), but also the progress status, the expected calculating time and the image-recording time. Accordingly, it becomes possible for the operator to grasp the processing statuses in each of the processing steps more easily and more accurately than ever.

It is possible to select a specific image-recording job from the list of the image-recording jobs displayed on each of the job screens so as to apply the processing to the specific image-recording job selected. Further, it is also possible to change the priority order of the image-recording job concerned. Still further, it is also possible to confirm or modify the arithmetic calculation processing conditions and the image-recording conditions and to delete the unnecessary image-recording job from the list. As a result, since the operator can efficiently and appropriately conducts the processing in each of the processing steps with his accurate judgment, it becomes possible to implement the smooth production.

When viewing image-recording system 1 as a whole, since the operator can efficiently conducts the processing as mentioned in the above, it is possible to avoid such a situation that the execution of the image-recording jobs piles up, as frequently happened in the conventional systems. Further, it becomes possible to configure an effective image-recording system, which makes it possible to efficiently conduct the image-recording operation.

It is preferable that a specific image-processing apparatus 7, suitable for transmitting the image-recording job, can be selected out of image-processing apparatuses 7 coupled to network 2 in the site of image-information transmitting apparatus 3. This makes it possible to conduct the image-recording operation more efficiently than ever. Further, it is preferable that the system is so constituted that image-information transmitting apparatus 3 transmits the image data only for one block of the image to be repeatedly recorded in image-recording apparatus 5. This makes it possible to shorten the time for inputting the image data into image-processing apparatus 7, since only a little amount of image information, etc. need to be transmitted from image-information transmitting apparatus 3.

Although the case in which image-recording apparatus 5 includes recording apparatus 6 and image-processing apparatus 7, each serving as an independent apparatus, is exemplified in the foregoing (refer to Fig. 1), it is also possible to integrate them into a single apparatus, for instance, by incorporating image-processing apparatus 7 into recording apparatus 6. In the present embodiment, image-recording apparatus 5 includes such the integrated apparatus.

Since the USB interface is employed for coupling image-processing apparatus 7 to recording apparatus 6, USB driver 82 is equipped into image-processing apparatus 7 of the aforementioned embodiment. However, it is also possible to employ the SCSI, the IEEE1394, etc. as the interface, and a driver suitable for the interface protocol employed would be equipped as needed. Further, it is also possible to employ an exclusive interface connection by incorporating the CPU (Central Processing Unit) of image-processing apparatus 7 into recording apparatus 6.

Although the case that the ink-jet printer of the serial heads method is employed for recording apparatus 6 of image-recording apparatus 5 and the case that the image is textile-printed on the cloth, serving as recording medium "A", are exemplified in the foregoing, it is needless to say that the scope of the present invention is not limited to the above.

As described in the foregoing, according to the embodiment, the following effects can be attained.
(1) It is possible to control the processing states of the image information and the layout information, which are transmitted and employed for image-recording job, separately in the receiving step, the arithmetic calculation step and the image-recording step by changing the priority order of the processing or deleting the specific image-recording job by using the inputted job screen, the arithmetic calculation job screen and the recording job screen displayed in the display input section, respectively. As a result, it becomes possible for the operator of the image-recording apparatus to accurately grasp the processing state in each of the steps, resulting in a smooth image-recording operation.
(2) It is possible to select a single or a plurality of image-recording job(s) from the list of the image-recording jobs displayed on each of the job screens so as to apply the processing to the selected image-recording job(s). Further, it is also possible to change the priority order of the image-recording job(s) concerned. Still further, it is also possible not only to confirm or modify the arithmetic calculation processing conditions and the image-recording conditions, but also to delete the unnecessary image-recording job(s) from the list. As a result, it becomes possible to efficiently and appropriately conducts the processing in each of the processing steps with his accurate judgment.
(3) It is possible for the display input section to acquire the accurate information of the signal receiving state from the image information controlling section, which controls the image information storage section for storing the image information, etc. As a result, it becomes possible for the operator of the image-recording apparatus to accurately grasp the processing state in the step of receiving the image information.
(4) It is possible for the display input section to acquire the accurate information of the arithmetic calculation processing state from the arithmetic calculating section, which applies the arithmetic calculation processing to the image information so as to convert the image information to the data recordable for the recording medium, and the data controlling section, which controls the data storage section for storing the data. As a result, it becomes possible for the operator of the image-recording apparatus to accurately grasp the processing state in the step of the arithmetic calculation processing.
(5) It is possible for the display input section to acquire the accurate information of the output processing state from the data controlling section, which controls the data storage section for storing the data, and the output processing section, which reads the data from the data storage section so as to output the read data. As a result, it becomes possible for the operator of the image-recording apparatus to accurately grasp the processing state in the step of the output processing.
(6) It is possible to conducts the image-recording operation employing the image-recording apparatus while displaying the processing states of the image information, which are transmitted and employed for image-recording job, in the receiving step, the arithmetic calculation step and the image-recording step separately on the inputted job screen, the arithmetic calculation job screen and the recording job screen displayed in the display input section, respectively. As a result, it becomes possible for the operator of the image-recording apparatus to appropriately and accurately grasp the processing state in each of the steps in order to conduct the image-recording operation.
(7) Other than the cloth and the paper, various kinds of recording mediums can be employed for the image-recording operation embodied in the present invention. As a result, it becomes possible for the operator of the image-recording apparatus to appropriately and accurately grasp the processing states in the steps of receiving the image information, the arithmetic calculation processing and the image-recording operation in order to conduct the image-recording operation.
(8) Since the operator can efficiently conducts the processing by employing the image-processing apparatus, it is possible to avoid such a situation that the execution of the image-recording jobs piles up within the system. As a result, it becomes possible to configure an effective image-recording system, which makes it possible to efficiently conduct the image-recording operation.
(9) Since the operator can efficiently conducts the processing by employing the image-processing apparatus, it is possible to avoid such a situation that the execution of the image-recording jobs piles up within the system. As a result, it becomes possible to configure an effective image-recording system, which makes it possible to efficiently conduct the image-recording operation. Further, since it also becomes possible for the image information transmitting apparatus site to grasp the image-recording status, the image-recording operation can be conducted in the system more efficiently than ever.
(10) It becomes possible for the image information transmitting apparatus site to select an image-processing apparatus, suitable for transmitting the image-recording job, out of the image-processing apparatuses coupled to the network. As a result, it becomes possible to configure an image-recording system, which can conduct the image-recording operation more efficiently than ever.

Disclosed embodiment can be varied by a skilled person without departing from the spirit and scope of the invention.

## Claims

1. An image-processing apparatus, comprising:
a receiving section to receive jobs, each of which includes image data;
an arithmetic calculating section to convert said image data to print data for every job;
a storage section to store said jobs received by said receiving section and said print data converted by said arithmetic calculating section for every job;
an outputting section to output said print data to a printing section for every job; and
a controlling section to control a receiving processing applied for said jobs in said receiving section, a conversion processing applied for each of said jobs in said arithmetic calculating section and an output processing applied for each of said jobs in said outputting section.

2. The image-processing apparatus of claim 1, further comprising:
a displaying section to display a receiving state of each of said jobs in said receiving section, a converting state of each of said jobs in said arithmetic calculating section and an outputting state of each of said jobs in said outputting section, for every job.

3. The image-processing apparatus of claim 2,
wherein said displaying section has an inputting function for receipting a processing for each of said jobs.

4. The image-processing apparatus of claim 1,
wherein said controlling section has a function of establishing a priority order of said conversion processing to be applied for said jobs, inputted by said inputting section, in said arithmetic calculation section.

5. The image-processing apparatus of claim 1,
wherein said controlling section has functions of temporarily stopping, restarting and suspending said conversion processing being applied for each of said jobs in said arithmetic calculation section.

6. The image-processing apparatus of claim 1,
wherein said controlling section has functions of temporarily stopping, restarting and suspending said output processing being applied for each of said jobs in said outputting section.

7. The image-processing apparatus of claim 1,
wherein said controlling section has functions of terminating said conversion processing being applied for each of said jobs in said arithmetic calculation section, and terminating said output processing being applied for each of said jobs in said outputting section.

8. The image-processing apparatus of claim 1,
wherein said controlling section has a function of establishing a priority order of said conversion processing to be applied for a plurality of jobs waiting at a standby status in said arithmetic calculation section.

9. The image-processing apparatus of claim 1,
wherein said controlling section has a function of establishing a priority order of said output processing to be applied for a plurality of jobs waiting at a standby status in said outputting section.

10. The image-processing apparatus of claim 1,
wherein said storage section is a hard disc drive.

11. An image-recording apparatus, comprising:
a receiving section to receive jobs, each of which includes image data;
an arithmetic calculating section to convert said image data to print data for every job;
a storage section to store said jobs received by said receiving section and said print data converted by said arithmetic calculating section for every job;
an outputting section to output said print data for every job;
a controlling section to control a receiving processing applied for said jobs in said receiving section, a conversion processing applied for each of said jobs in said arithmetic calculating section and an output processing applied for each of said jobs in said outputting section; and
a printing section to print an image based on said print data outputted by said outputting section.

12. The image-recording apparatus of claim 11,
wherein said printing section includes an ink-jet printer.

13. An image-recording system, comprising:
a transmitting section to transmit jobs, each of which includes image data;
a receiving section, coupled to said transmitting section through a network, to receive said jobs transmitted from said transmitting section;
an arithmetic calculating section to convert said image data to print data for every job;
a storage section to store said jobs received by said receiving section and said print data converted by said arithmetic calculating section for every job;
an outputting section to output said print data for every job;
a controlling section to control a receiving processing applied for said jobs in said receiving section, a conversion processing applied for each of said jobs in said arithmetic calculating section and an output processing applied for each of said jobs in said outputting section; and
a printing section to print an image based on said print data outputted by said outputting section.
